# EUROPEAN PATENT APPLICATION

(11) **EP 4 502 712 A1**
(43) Date of publication of application: **05.02.2025**
(21) Application number: 22933545.0
(22) Date of filing: 25.03.2022
(51) Int. Cl.: G02C 7/04, B29C 39/10, B29C 39/12

(54) **METHOD FOR PRODUCING CONTACT LENS**

(71) Applicant: MENICON CO., LTD., Naka-ku Nagoya-shi, Aichi 460-0006 (JP)
(72) Inventor: SUZUKI, Hiroaki, Kasugai-shi, Aichi 487-0032 (JP); SATAKE, Yurika, Kasugai-shi, Aichi 487-0032 (JP); OTANI, Koji, Kasugai-shi, Aichi 487-0032 (JP); HAYASHI, Yuki, Kasugai-shi, Aichi 487-0032 (JP)
(74) Representative: Winter, Brandl - Partnerschaft mbB
(86) International application number: PCT/JP2022/014676
(87) International publication number: WO 2023/181408

(57) **Abstract**

Provided is a novel method for producing a contact lens whereby it is possible to solve at least one problem that becomes an obstacle when equipping a contact lens with a separate component such as an electronic element. When matching a component-supporting mold 14 supporting a component to be embedded 36 with a first mold 12, performing curing treatment of a first molding material 18, and thereby obtaining a primary molded article 20 in which the component 36 is inserted, the component-supporting mold 14 is removed while curing of the first molding material 18 is incomplete on the component-supporting mold 14 side. A second mold 22 is subsequently matched with the first mold 12 in which the primary molded article 20 is left, filled with a second molding material 26, and curing treatment is performed, thereby producing a contact lens 10 as an integrally molded product in which the component 36 is embedded.

## Description

### TECHNICAL FIELD

This invention relates to a contact lens, and in particular to a method of manufacturing a contact lens in which a component different from the lens material is embedded, and to the contact lens.

### BACKGROUND ART

Contact lenses are worn in the eye and have generally been provided with certain optical characteristics for the purpose of correcting vision. In recent years, however, there has been consideration not only of improving optical characteristics but also of adding appearance design characteristics, adding functions different from changing optical characteristics or vision correction, and the like. To give a specific example, smart contact lenses that have electrical or electronic functions in contact lenses to change their characteristics, acquire biometric information, display text and other information in the field of vision, and perform switching operations by moving the gaze, etc., are also being considered.

However, contact lenses designed to have new characteristics or additional functions are structurally different from conventional contact lenses, and there are still several obstacles to their practical application. In particular, in order to add new characteristics or additional functions, it is necessary to equip the contact lens with a separate component such as an electronic part. It is desirable to place the separate component in an embedded state inside the contact lens when considering the effect on the eyeball, eyelid, or other living tissues. However, there are several problems that must be overcome when attaching the separate component into the contact lens integrally and with high positional accuracy.

Under these circumstances, U.S. Patent No. US 10,028,702 B2 (Patent Document 1), Japanese Unexamined Patent Publication No. JP-A-2019-530009 (Patent Document 2), and Japanese Patent No. JP-B-6636212 (Patent Document 3) are among the patent documents that disclose inventions related to contact lenses equipped with a separate component.

Patent document 1 discloses a method of manufacturing a contact lens by overlapping and fastening a first lens layer in the lens thickness direction to a second lens layer in which electronic elements are embedded.

However, according to the present inventors' examination, in the contact lens disclosed in Patent Document 1, it is difficult to maintain the first lens layer and the second lens layer in a precise and stable fixed state. In particular, when the first lens layer and the second lens layer are fastened with a concave-convex mating structure, it is difficult to form a concave-convex mating part with good dimensional accuracy, and when the first lens layer and the second lens layer are fastened with an adhesive, there are concerns about the adverse effects of the adhesive on optical performance. Besides, when precision is required for the placement of electronic elements, for example, it is difficult to maintain placement precision even after the first lens layer and second lens layer are combined. In addition, the overall number of precision processes increases, making it unsuitable for mass production. Furthermore, when the first lens layer and the second lens layer are fastened with an adhesive, for example, it is difficult to maintain the adhesiveness in the wet environment of the eye.

Patent Document 2 discloses a method of manufacturing a contact lens in which, when using a lens blank obtained by cutting a rod of lens material in the length direction and cutting a contact lens from the lens blank, electronic elements are embedded at predetermined intervals in the length direction during the manufacturing process of the rod, so that the electronic elements are distributed in each lens blank.

However, according to the present inventors' examination, in the contact lens disclosed in Patent Document 2, when molding the rod with the electronic elements inserted into the rod, depending on the size of the electronic elements, the polymerization molding of the rod may be adversely affected, or it is difficult to reliably obtain the positioning accuracy of the electronic elements in the rod. In addition, there was a problem of difficulty in securing the positioning accuracy of the electronic elements in the rod. In addition, it is difficult to accurately grasp the position, orientation, and the like of the electronic elements in the rod until the cutting of the lens blank has progressed to a certain degree, and there is a limit to correcting the placement of the electronic elements in the lens during the cutting process. In particular, when contact lenses are cut and formed to correspond to the eyes of individual users, the variation in the position or the like of the electronic elements in the lens blank becomes an even greater problem, making the method unsuitable for industrial production of contact lenses.

In addition, Patent Document 3 discloses a method of molding a contact lens having a laminated two-layer structure, in which a separate component is placed and positioned in a recess formed in a molded article of a first layer, and then a second layer is molded, thereby molding a contact lens in which the said component is embedded.

However, according to the present inventors' examination, in the contact lens disclosed in Patent Document 3, voids, which are thought to be caused by shrinkage during the molding of the second layer or other factors, are prone to occur near the periphery of the separate component. This makes it difficult to stably manufacture contact lenses with a quality that does not pose a practical problem.

### BACKGROUND ART DOCUMENTS

### PATENT DOCUMENTS

Patent Document 1: US 10,028,702 B2
Patent Document 2: JP-A-2019-530009
Patent Document 3: JP-B-6636212

### SUMMARY OF THE INVENTION

### PROBLEM THE INVENTION ATTEMPTS TO SOLVE

One of the problems exemplified above, or a plurality of them being interrelated, may become an issue in practical application, depending on the type of component to be equipped and its required characteristics, functions, performance, and the like. Here, it is an object of the present invention to solve at least one of the problems that may be an obstacle to equipping a contact lens with a separate component.

### MEANS FOR SOLVING THE PROBLEM

The above and/or optional objects of the present invention may be attained according to at least one of the following preferred embodiments of the invention. The following preferred embodiments and/or elements employed in each preferred embodiment of the invention may be adopted at any possible optional combinations.

A preferred embodiment 1 of the present invention is as follows.

A method of manufacturing a contact lens comprising:
defining a first molding cavity in which a component to be embedded is arranged by matching a component-supporting mold, the component-supporting mold positioning and supporting the component, with a first mold providing one of a lens front surface and a lens back surface;
performing curing treatment on a first molding material filling the first molding cavity to obtain a primary molded article in which the component is inserted, wherein, in a state where curing of the first molding material is incomplete on a side of the component-supporting mold, the component-supporting mold is removed from the first mold while leaving the primary molded article in the first mold;
defining a second molding cavity by matching a second mold providing another of the lens front surface and the lens back surface with the first mold in which the primary molded article is left; and
filling the second molding cavity with a second molding material and performing curing treatment, thereby manufacturing the contact lens as an integrally molded product in which the component is embedded.

According to the present preferred embodiment, by removing the component-supporting mold while curing of the first molding material is incomplete, it is possible to reduce or avoid the occurrence of molding defects such as voids in the primary molded article in which the component is inserted. That is, as a result of the review by the inventors, it was found that voids or other defects in the primary molded article were likely to occur especially around the component. After further review, it was found that even after the curing of the first molding material progressed to a certain degree, voids or other defects still did not occur. It was also found that it is possible to progress the curing of the first molding material to a state in which the component can be held in a predetermined position even when the curing of the first molding material is incomplete and almost no voids are observed. Therefore, in the present preferred embodiment, the component-supporting mold is removed before the curing of the first molding material is completed to release the restrained state on the surface of the first molding material or the sealed state of the first molding cavity by adhesion of the component-supporting mold, thereby minimizing the occurrence of voids in the primary molded article and molding the primary molded article in which the component is held in a fastened state with stable quality.

Moreover, even if the dimensional accuracy of the primary molded article deteriorates due to sink marks or the like caused by the removal of the component-supporting mold with the curing being incomplete, the subsequent molding treatment of the second molding material using the second mold and the like can sufficiently ensure the dimensional accuracy of the contact lens as a completed molded product by integral molding.

A preferred embodiment 2 of the present invention is as follows.

The method according to the preferred embodiment 1, wherein before the curing treatment of the second molding material, curing of the first molding material is completed.

According to the present preferred embodiment, the curing of the first molding material is completed before the curing treatment of the second molding material, suitably before the second molding material is injected into the cavity. By so doing, the shape and the quality of the primary molded article can be stabilized, thereby further improving fastening force and positioning accuracy of the component and the like.

A preferred embodiment 3 of the present invention is as follows.

A method of manufacturing a contact lens comprising:
defining a first molding cavity by matching a component-supporting mold with a first mold providing one of a lens front surface and a lens back surface;
performing curing treatment on a first molding material within the first molding cavity to obtain a primary molded article in which a component to be embedded, the component being positioned and supported by the component-supporting mold, is inserted;
after removing the component-supporting mold from the first mold while leaving the primary molded article in the first mold, defining a second molding cavity by matching a second mold providing another of the lens front surface and the lens back surface with the first mold; and
performing curing treatment on a second molding material within the second molding cavity thereby manufacturing the contact lens as an integrally molded product in which the component is embedded, wherein
the component-supporting mold includes:
   a support part positioning and supporting the component on a cavity forming surface of the first molding cavity; and
   a flexible portion provided to a wall defining the first molding cavity, the flexible portion being allowed to deform due to shrinkage of the first molding material during polymerization molding.

According to the present preferred embodiment, the component-supporting mold is provided with a support part for positioning and supporting the component, and the component-supporting mold is provided with the flexible portion. This makes it possible to reduce or avoid the occurrence of molding defects such as voids in the primary molded article in which the component is inserted, while ensuring positioning accuracy of the component using the component-supporting mold. That is, as a result of the review by the inventors, it was found that voids or other defects in the primary molded article were likely to occur especially around the component. After further review, it was found that voids or other defects were likely to occur due to shrinkage during the curing of the first molding material. Therefore, in the present preferred embodiment, in the component-supporting mold, the support stability of the component is ensured by the supported part of the component, while reducing or eliminating the restrained state on the surface of the first molding material, or allowing volume changes of the molding cavity by the flexible portion provided to the wall that defines the first molding cavity. This makes it possible to minimize the occurrence of voids in the primary molded article and mold the primary molded article in which the component is held in a fastened state with stable quality.

Moreover, even if the dimensional accuracy of the primary molded article deteriorates due to deformation of the flexible portion of the component-supporting mold, the subsequent molding treatment of the second molding material using the second mold and the like can sufficiently ensure the dimensional accuracy of the contact lens as a completed molded product by integral molding.

In the present preferred embodiment, in the component-supporting mold, for example, the entire portion forming the molding cavity may be the flexible portion, or it would also be possible that by, for example, thinning the outer circumferential area of the approximately spherical cap-shaped cavity forming portion in an annular shape to be made into the flexible portion so that the approximately entire portion forming the molding cavity can move in parallel to allow the cavity forming surface to move inward into the molding cavity due to shrinkage during the curing of the first molding material. Alternatively, when making the portion forming the molding cavity partially flexible, the flexible portion may be provided at a position away from the support part of the component. For example, the present preferred embodiment includes the method of manufacturing a contact lens adopting the component-supporting mold equipped with a flexible portion that is allowed to deform due to shrinkage during polymerization molding of the first molding material in the region of the wall defining the first molding cavity away from the supported part of the component. In any of the preferred embodiments, by reducing or eliminating the restrained state with respect to the surface of the first molding material by the component-supporting mold, or allowing volume changes of the molding cavity by the flexible portion, it is possible to minimize the occurrence of voids in the primary molded article and mold the primary molded article in which the component is held in a fastened state with stable quality. Note that the preferred embodiment in which the restrained state by the component-supporting mold with respect to the surface of the first molding material is reduced or eliminated by the flexible portion does not mean the separation between the surface of the first molding material and the cavity forming surface of the component-supporting mold. For example, it can be understood from the fact that the restrained state with respect to the position and the shape of the surface of the first molding material is eliminated or ameliorated by the flexible portion allowing the cavity forming surface to move or deform while maintaining the adhered state between the surface of the first molding material and the cavity forming surface of the component-supporting mold.

A preferred embodiment 4 of the present invention is as follows.

A method of manufacturing a contact lens comprising:
defining a first molding cavity by matching a component-supporting mold with a first mold providing one of a lens front surface and a lens back surface;
performing curing treatment on a first molding material within the first molding cavity to obtain a primary molded article in which a component to be embedded, the component being positioned and supported by the component-supporting mold, is inserted;
after removing the component-supporting mold from the first mold while leaving the primary molded article in the first mold, defining a second molding cavity by matching a second mold providing another of the lens front surface and the lens back surface with the first mold; and
performing curing treatment on a second molding material within the second molding cavity thereby manufacturing the contact lens as an integrally molded product in which the component is embedded, wherein
the component-supporting mold is made of a material having adhesion with respect to the first molding material smaller than adhesion of the component with respect to the first molding material.

According to the present preferred embodiment, the component-supporting mold whose adhesion to the first molding material is lower than that of the component is adopted. This makes it possible to reliably obtain positioning accuracy of the component using the component-supporting mold while reducing or avoiding occurrence of molding defects such as voids in the primary molded article in which the component is inserted. That is, as a result of the review by the inventors, it was found that voids or other defects in the primary molded article were likely to occur especially around the component. After further review, it was found that voids or other defects were likely to occur due to shrinkage during the curing of the first molding material. Therefore, in the present preferred embodiment, the component-supporting mold is set to have low adhesion to the first molding material. By so doing, the first molding material is configured to easily separate from the component-supporting mold during the shrinkage of the first molding material due to curing, thereby reducing the negative pressure generated in the first molding material during or after molding around the component. As a result, it is possible to minimize the occurrence of voids in the primary molded article and mold the primary molded article in which the component is held in a fastened state with stable quality.

Moreover, even if the dimensional accuracy of the primary molded article deteriorates due to the separation of the first molding material from the cavity forming surface of the component-supporting mold during the curing of the first molding material, the subsequent molding treatment of the second molding material using the second mold and the like can sufficiently ensure the dimensional accuracy of the contact lens as a completed molded product by integral molding.

A preferred embodiment 5 of the present invention is as follows.

The method according to any of the preferred embodiments 1-4, wherein
the first mold is a mold for the lens front surface, and
the second mold is a mold for the lens back surface.

According to the present preferred embodiment, for the first mold equipped with a concave molding surface (the cavity forming surface) corresponding to the lens front surface, it is possible to use the concave molding surface to house the first molding material. Therefore, the operation during the molding becomes easy, and simplification of the lens manufacturing equipment can be easily realized.

A preferred embodiment 6 of the present invention is as follows.

The method according to any of the preferred embodiments 1-5, wherein
a recess opening toward the component-supporting mold is provided at a center portion of the primary molded article such that a thickness dimension at the center portion of the primary molded article is reduced.

According to the present preferred embodiment, since the thickness dimension of the center portion of the primary molded article is reduced, even if dimensional distortion or the like occurs in the primary molded article, the size of the distortion or the like in the center portion can be minimized. Therefore, it is possible to reduce or avoid adverse effects such as distortion that occur in the primary molded article, especially in the center portion having a large influence on optical characteristics. In the present preferred embodiment, the recess opening toward the component-supporting mold may be a depression shape with a bottom or a through-hole shape without a bottom, and the said working effects can be similarly obtained.

A preferred embodiment 7 of the present invention is as follows.

The method according to any of the preferred embodiments 1-6, wherein
the component-supporting mold includes at least one of a concave engaging part and a convex engaging part positioning the component.

According to the present preferred embodiment, in the molding cavity of the primary molded article, the component can be positioned and supported by utilizing engagement with respect to the component-supporting mold by mechanical physical action, namely by concave-convex engagement or the like (excluding chemical physical action such as electron covalent (covalent bond) and intermolecular force (van der Waals force)).

A preferred embodiment 8 of the present invention is as follows.

The method according to the preferred embodiment 7, wherein
when molding the primary molded article within the first molding cavity, the first molding material is inserted between the component-supporting mold and the component, and the curing treatment is performed on the first molding material with the component covered with the first molding material.

According to the present preferred embodiment, the component is used for subsequent molding of the second molding material and the like in an embedded state of being completely embedded in the primary molded article without being exposed on the surface. Therefore, the adhesion of the primary molded article to the second molding material or the like will be exhibited approximately uniformly and favorably over the entire surface, and the occurrence of molding defects in the subsequent molding of the second molding material or the like can be more effectively prevented.

A preferred embodiment 9 of the present invention is as follows.

The method according to any of the preferred embodiments 1-8, wherein
the component is positioned and supported by the component-supporting mold in an affixed state.

According to the present preferred embodiment, the component is supported in the affixed state with respect to the cavity forming surface of the component-supporting mold. This makes it easy to hold the component more stably, and makes it possible for the cavity forming surface of the component-supporting mold to have a simple and smooth shape, for example. When the component is positioned and supported by the component-supporting mold, it is also possible to adopt the mechanism supporting in the affixed state described in the present preferred embodiment, in addition to the mechanism for supporting by the engaging part as described in the preceding preferred embodiment 7.

In particular, in the present preferred embodiment, it is possible for the cavity molding surface of the component-supporting mold to have a smooth curved surface without uneven steps or the like, and the component can be positioned and supported in the affixed state thereto. By so doing, the surface of the primary molded article molded by the component-supporting mold, including the surface of the component, can be made into a smooth curved surface shape entirely without uneven steps or the like. As a result, the occurrence of voids or the like during the molding of the first molding material can be more effectively minimized.

A preferred embodiment 10 of the present invention is as follows.

The method according to the preferred embodiment 9, wherein the component is directly formed on a surface of the component-supporting mold such that the component is positioned and supported in the affixed state.

According to the present preferred embodiment, by forming the component directly on the surface of the component-supporting mold by techniques such as printing and plating, it is easy to obtain a good affixed state of the component with respect to the surface of the component-supporting mold. It is not necessary to form the entire component on the surface of the component-supporting mold. For example, as exemplified in the third practical embodiment described later, the component can be partially formed on the surface of the component-supporting mold and inserted into the primary molded article. Subsequently, the component-supporting mold is removed to expose the partial component, and the component can be entirely completed by forming the remaining portion on the surface of the exposed partial component or by fastening the separately formed remaining portion to the partial component. Then, it is possible to obtain a contact lens in which the component is inserted by matching the second mold 22 and molding the second molding material.

According to the present preferred embodiment, the cavity forming surface of the component-supporting mold can be formed with a smooth surface shape and the component is supported thereon. Thus, the surface of the obtained primary molded article molded by the component-supporting mold can be made into a smooth shape overall, including the exposed surface of the component. This makes it possible to reduce or avoid molding defects or the like caused by, for example, a complicated uneven shape in the molding of the primary molded article.

A preferred embodiment 11 of the present invention is as follows.

The method according to any of the preferred embodiments 1-10, wherein the component is positioned and supported by the component-supporting mold without an adhesive.

According to the present preferred embodiment, there is no need to be concerned about adverse effects of the adhesive on the living tissue or the lens material, and improvement in reliability of the lens product is also achieved.

A preferred embodiment 12 of the present invention is as follows.

The method according to any of the preferred embodiments 1-11, wherein the component-supporting mold is subjected to surface treatment to improve mold releasability at a cavity forming surface of the first molding cavity.

According to the present preferred embodiment, it is possible to reduce or eliminate problems caused by the component-supporting mold being excessively fastened to the component. For example, when releasing the primary molded article from the component-supporting mold, the mold release itself becomes easy, and it is also effective in preventing troubles such as the component remaining partially on the component-supporting mold, and the attendant damage to the component or the like.

A preferred embodiment 13 of the present invention is as follows.

The method according to any of the preferred embodiments 1-12, wherein the component is harder than a lens material.

According to the present preferred embodiment, the component is hard, thereby improving the support stability of the component by the component-supporting mold. It is also possible to discuss using the hardness of the component in order to improve the shape stability of the primary molded article or the like.

A preferred embodiment 14 of the present invention is as follows.

The method according to the preferred embodiment 13, wherein the component is an electronic element including a metal portion.

According to the present preferred embodiment, it is possible to reliably obtain the hardness of the component by utilizing the metal portion constituting the electronic element. Besides, according to the present invention, since the component can be completely embedded inside the lens made of the lens material, direct contact of the electronic element including the metal portion with the living body can be avoided.

A preferred embodiment 15 of the present invention is as follows.

The method according to any of the preferred embodiments 1-13, wherein both the first molding material and the second molding material are polymerizable monomers that provide an oxygen-permeable hard lens.

According to the present preferred embodiment, while improving the oxygen permeability in the contact lens as a product, the occurrence of defects such as voids due to polymerization shrinkage of the first molding material can be reduced or avoided as described above, thereby reliably obtaining production efficiency and improving quality with the molded product.

A preferred embodiment 16 of the present invention is as follows.

The method according to any of the preferred embodiments 1-15, wherein the first molding material and the second molding material are the same.

According to the present preferred embodiment, by making the first molding material and the second molding material the same, integration is promoted, and mechanical characteristics and optical characteristics can be improved and stabilized. In addition, by making the first molding material and the second molding material the same, equipment and management for each curing treatment can be simplified.

A preferred embodiment 17 of the present invention is as follows.

The method according to any of the preferred embodiments 1-16, wherein
when performing the curing treatment on the first molding material filling the first molding cavity to obtain the primary molded article in which the component is inserted, the curing treatment is performed such that the first molding material progresses from a side of the first mold toward a side of the component-supporting mold.

According to the present preferred embodiment, by controlling the progress of curing of the first molding material, even if shrinkage or deformation occurs due to the curing, it is easy to control them and to improve the molding quality. In particular, by adopting the present preferred embodiment 17 in combination with the preceding preferred embodiment 1, the curing treatment on the side of the first mold is further progressed while leaving the curing incomplete on the side of the component-supporting mold, where voids and the like are likely to occur. This makes it possible to improve stability of the shape and the quality of the primary molded article when the component-supporting mold is removed.

A preferred embodiment 18 of the present invention is as follows.

The method according to any of the preferred embodiments 1-17, wherein
after molding the first molding material and removing the component-supporting mold from the first mold, and before matching the second mold with the first mold, an intermediate molded article is attached to the primary molded article, and
the second mold is matched with the first mold in which the primary molded article including the intermediate molded article is left to define the second molding cavity, and the curing treatment is performed on the second molding material within the second molding cavity.

According to the present preferred embodiment, it is possible to manufacture a contact lens with a composite structure in which the intermediate molded article is integrally incorporated while ensuring the technical effects as described above, such as positioning of the component by the component-supporting mold and reducing the occurrence of voids. The attachment of the intermediate molded article to the primary molded article can be advantageously realized, for example, by the preferred embodiment 19 or 20 described below.

A preferred embodiment 19 of the present invention is as follows.

The method according to the preferred embodiment 18, wherein
after molding the first molding material and removing the component-supporting mold from the first mold, and before matching the second mold with the first mold, an auxiliary mold is matched with the first mold in which the primary molded article is left to define an intermediate mold cavity,
the intermediate mold cavity is filled with a third molding material and curing treatment is performed to mold the intermediate molded article in an attached state to the primary molded article, and then
the auxiliary mold is removed from the first mold, the second mold is matched with the first mold in which the primary molded article including the intermediate molded article is left to define the second molding cavity, and the curing treatment is performed on the second molding material within the second molding cavity.

A preferred embodiment 20 of the present invention is as follows.

The method according to the preferred embodiment 18, wherein the intermediate molded article is formed separately from the primary molded article, and is attached to the primary molded article.

That is, according to the preferred embodiment 19 or 20, even if unevenness, gaps, or the like exist in the assembled state of the primary molded article and the intermediate molded article, the subsequent molding of the second molding material makes it possible to ensure sufficient and stable accuracy and quality in the contact lens as a completed molded product by integral molding.

A preferred embodiment 21 of the present invention is as follows.

The method according to any of the preferred embodiments 18-20, wherein the intermediate molded article is made of a silicone material.

According to the present preferred embodiment, by utilizing the high oxygen permeability of the silicone material, it is possible to improve oxygen permeability in the contact lens. For example, even if the oxygen permeability of the first molding material or the second molding material is relatively poor, by placing the intermediate molded article in the lens in an embedded state (including partially exposed state on the lens surface), the thickness of the lens layer comprising the first molding material or the second molding material is reduced and the thickness is compensated by the intermediate molded article made of the silicone material. By so doing, it is also possible to achieve good oxygen permeability while reliably obtaining the lens thickness required for embedding the component.

Besides, as described later, by employing a hard lens material such as RGP (oxygen-permeable lens material) as the first molding material or the second molding material, for example, it is also possible to improve the overall oxygen permeability with the intermediate molded article made of the silicone material, while improving the positioning accuracy of the component in the worn state in the eye.

A preferred embodiment 22 of the present invention is as follows.

The method according to any of the preferred embodiments 18-21, wherein a recessed part is formed at a center portion of the primary molded article, and the intermediate molded article is inserted in and attached to the recessed part.

According to the present preferred embodiment, it is easy to efficiently set the area where the intermediate molded article is placed in the center portion and to reliably obtain the thickness dimension of the intermediate molded article. For example, when a separately molded intermediate molded article is attached to the primary molded article, the recessed part can be used to position the intermediate molded article. For example, when a highly oxygen-permeable material such as silicone material is adopted as the intermediate molded article, the recessed part can be used to reduce the thickness of the primary molded article in the center portion and to increase the thickness of the intermediate molded article, thereby further improving the overall oxygen permeability. In addition, by attaching the intermediate molded article to the recessed part, it is possible to minimize the unevenness on the surface of the primary molded article with the intermediate molded article attached, making it easy to suppress molding defects caused by such unevenness during the subsequent molding of the second molding material.

A preferred embodiment 23 of the present invention is as follows.

The method according to any of the preferred embodiments 18-22, wherein the intermediate molded article is provided at a lens center portion, and an entire surface on a lens front surface side of the intermediate molded article is covered with a surface layer formed of the first molding material or the second molding material.

According to the present preferred embodiment, direct exposure of the intermediate molded article on the lens front surface (the convex surface of approximately spherical cap shape), which is to be overlapped with the eyelid when the lens is worn, is avoided. Therefore, it is possible to avoid discussing friction, adsorption, or influences on the living body due to the intermediate molded article coming into contact with the eyelid. This will avoid deterioration of lens performance due to the intermediate molded article, thereby achieving greater freedom of designing or selecting the material or the like of the intermediate molded article. Specifically, for example, it becomes easy to adopt silicone material, which often has a problem of sticking to the living body, as the material of the intermediate molded article.

A preferred embodiment 24 of the present invention is as follows.

The method according to any of the preferred embodiments 1-23, wherein
the first mold includes a concave cavity forming surface that provides a molding surface for the lens front surface,
the second mold includes a convex cavity forming surface that provides a molding surface for the lens back surface, and
with the first mold opening vertically upward, the component-supporting mold and the second mold are individually matched with the first mold by being overlapped from above.

According to the present preferred embodiment, the lens front surface, which is a convex surface of approximately spherical cap shape, can be formed with the first molding material, and the lens back surface, which is a concave surface of approximately spherical cap shape, can be formed with the first molding material. This allows the surface of the component-supporting mold for supporting the component to be a convex surface, which makes it easier to perform processing from the outside to support the component in comparison with a concave surface.

However, in the preceding preferred embodiments 1-23, it is also possible to adopt the following preferred embodiment which is different from the present preferred embodiment, and the said following preferred embodiment can also be combined with other preferred embodiments to be described later.

The method according to any of the preferred embodiments 1-23, wherein
the first mold includes a cavity forming surface of convex shape that provides a molding surface for the lens back surface,
the second mold includes a cavity forming surface of concave shape that provides a molding surface for the lens front surface,
with the cavity forming surface of the first molding material in the component-supporting mold (the surface positioning and supporting the component), which is a concave surface of approximately spherical cap shape, opening vertically upward, the first mold is matched by being overlapped from above to define the first molding cavity, and
after removing the component-supporting mold while leaving the primary molded article in the first mold, the first mold is overlapped from above on the second mold with the concave cavity forming surface opening vertically upward to mold the second molding material in the second molding cavity in which the primary molded article is set.

A preferred embodiment 25 of the present invention is as follows.

The method according to any of the preferred embodiments 1-24, wherein the method is for manufacturing a scleral lens.

According to the present preferred embodiment, since the contact lens is a scleral lens, it is possible to suppress the movement of the lens on the eyeball in the worn state in comparison with a corneal lens, which is a hard or soft type of contact lens commonly used for vision correction. Therefore, in the contact lens provided by the present invention as described above, accuracy and stability of positioning of the component on the eyeball in the worn state can be advantageously ensured.

A scleral lens is interpreted in a broad sense, and may include various types of scleral lenses such as the one having an outer peripheral edge of approximately circular shape and slightly larger than the cornea, the one covering approximately half of the sclera, and the one having an outer peripheral edge of non-circular shape and covering approximately the entire sclera.

However, the present invention shall not be construed as limited to the present preferred embodiment or any other. The present invention is also applicable, for example, to general corneal contact lenses other than scleral lenses. Besides, the present invention can also be applied to soft contact lenses or contact lenses equivalent thereto by adopting a soft-type contact lens material as at least one or both of the first molding material and the second molding material, for example.

A preferred embodiment 26 of the present invention is as follows.

A contact lens made of an oxygen-permeable hard lens material comprising:
a component to be embedded placed inside in a fastened state to the oxygen-permeable hard lens material;
an intermediate member arranged inside a lens center portion while being made of a silicone material;
a front surface layer provided to cover an entire surface of the intermediate member on a lens front surface side while being made of the oxygen-permeable hard lens material; and
at least on a lens center axis, the front surface layer has a thickness dimension smaller than that of the intermediate member.

According to the present preferred embodiment, a contact lens can be provided as a composite structure utilizing a silicone material that can achieve higher oxygen permeability than an oxygen-permeable hard lens material while utilizing a hard lens material to achieve the characteristics required for positioning and supporting the component. In particular, by making the intermediate member made of a silicone material thicker than the front surface layer made of a hard lens material on the lens center axis, it is possible to advantageously ensure the oxygen permeability of the lens as a whole, even if the center portion of the lens is thickened due to the placement of the component or the like.

Besides, according to the present preferred embodiment, exposure of the silicone material to the lens front surface side is avoided by the front surface layer made of a hard lens material. This will avoid problems such as adsorption of the silicone material on the eyelid that is overlapped with the lens front surface during wear, thereby achieving a good wearing feeling. Regarding the lens back surface side, for example, by using a lens design that actively keeps the lacrimal fluid layer on the cornea as a scleral lens or the like, it is possible to reduce or avoid direct or pressurized contact with the living body (the cornea) when the lens is worn. Thus, in many cases, the exposure of the intermediate member on the lens back surface side is tolerated in comparison with the lens front surface side.

Meanwhile, the contact lens of such a specific structure according to the present preferred embodiment can be advantageously manufactured by the method as described in any of the preceding preferred embodiments 18-23, for example.

A preferred embodiment 27 of the present invention is as follows.

The contact lens according to the preferred embodiment 26, further comprising a back surface layer provided to cover an entire surface of the intermediate member on a lens back surface side while being made of the oxygen-permeable hard lens material, wherein
at least on the lens center axis, the back surface layer has a thickness dimension smaller than that of the intermediate member.

According to the present preferred embodiment, exposure of the intermediate member made of a silicone material is avoided on the lens back surface side as well. Thus, for example, even when the lens back surface overlaps the cornea in the worn state, the adsorption of the silicone material to the cornea can be eliminated, thereby improving the wearing feeling.

A preferred embodiment 28 of the present invention is as follows.

The contact lens according to the preferred embodiment 26 or 27, wherein at least an outer peripheral end of a lens peripheral portion is free of the intermediate member and is formed of the oxygen-permeable hard lens material.

According to the present preferred embodiment, it is possible, for example, to place no intermediate member near the outer circumference of the lens peripheral portion, or to make the thickness dimension of the hard lens material on the lens front surface side and/or the lens back surface side larger than that of the intermediate member on the radial inside of the lens peripheral portion. By so doing, it is also possible to advantageously ensure the shape maintainability of the entire lens or the like by using a hard lens material that is harder than the intermediate member.

A preferred embodiment 29 of the present invention is as follows.

The contact lens according to any of preferred embodiments 26-28, wherein
at a position where a lens thickness is maximum, the lens thickness that is maximum is greater than 0.7 mm, and
a total thickness of the surface layers that are made of the oxygen-permeable hard lens material and are provided on opposite sides of the intermediate member in a lens thickness direction is not greater than 0.7 mm.

According to the present preferred embodiment, in comparison with the case where the lens is constituted only by a hard lens material with high oxygen permeability, by utilizing the intermediate member made of a silicone material, it is possible to further advantageously ensure the oxygen permeability entirely in the lens thickness direction. Thus, even if the maximum lens thickness exceeds 0.7 mm, for example, it is easy to achieve the oxygen permeability required for daily use in which the lens is worn except the bedtime.

A preferred embodiment 30 of the present invention is as follows.

The contact lens according to any of the preferred embodiments 26-29, wherein the contact lens is a scleral lens.

According to the present preferred embodiment, as also described in the preceding preferred embodiment 25 which is for a scleral lens, since the contact lens is a scleral lens, the effects such as ease of improvement and ensuring of accuracy and stability of the positioning of the component on the eyeball in the worn state can be achieved.

### EFFECT OF THE INVENTION

According to the method of the present invention, it is easy to mold a contact lens in which a component is embedded by reducing or avoiding molding defects such as voids. Incidentally, in optical lenses, it is generally difficult to control the location of occurrence of voids or the like, for example, and if voids occur by entering the optical part, there is a risk of exerting an influence on vision. Even if voids occur in the peripheral part outside the optical part, they may lead to a decrease in the strength of the lens itself, which is likely to be a fatal defect in the product, especially for contact lenses with an electronic element or the like mounted. Besides, since an oxygen-permeable material allows water molecules to permeate, water droplets may be generated in the voids and possibly exert an influence on the electronic element. Thus, the technical significance of suppressing molding defects such as voids is considerable.

Additionally, in the contact lens according to the present invention, it is also easy to improve the oxygen permeability by utilizing a hard lens material for reliably obtaining the positioning accuracy of the component or the like, and by concomitantly employing the intermediate member made of a silicone material.

### BRIEF DESCRIPTION OF THE DRAWINGS

FIGS. 1A-1C are views suitable for explaining a molding process of a first molding material in a first practical embodiment of the present invention.
FIGS. 2A-2C are views suitable for explaining a molding process of a second molding material in the first practical embodiment of the present invention.
FIGS. 3A-3C show a component-supporting mold used in the first practical embodiment, wherein FIG. 3A is a perspective view, FIG. 3B is a side view, and FIG. 3C is a vertical cross sectional view.
FIGS. 4A-4C show the component-supporting mold of FIGS. 3A-3C in which a component to be embedded is set, wherein FIG. 4A is a perspective view, FIG. 4B is a side view, and FIG. 4C is a vertical cross sectional view.
FIGS. 5A-5D show a contact lens manufactured by the first practical embodiment, wherein FIG. 5A is a perspective view, FIG. 5B is a plan view, FIG. 5C is a side view, and FIG. 5D is a vertical cross sectional view.
FIGS. 6A-6E are views suitable for explaining a molding process of a second molding material in a second practical embodiment of the present invention.
FIGS. 7A and 7B are views suitable for explaining an example of an attachment process of an intermediate member in the second practical embodiment.
FIG. 8 is a view suitable for explaining another example of the attachment process of the intermediate member in the second practical embodiment.
FIGS. 9A-9G are views suitable for explaining molding processes of a first molding material and a second molding material in a third practical embodiment of the present invention.
FIGS. 10A and 10B are views suitable for explaining a process of attaching or forming a component to be embedded on a component-supporting mold used in the third practical embodiment.
FIG. 11 is a view suitable for illustrating another embodiment of the present invention.
FIG. 12 is a view suitable for illustrating yet another embodiment of the present invention.
FIGS. 13A-13F are views suitable for illustrating a molding process of still yet another embodiment of the present invention.
FIG. 14 shows photographs of a primary molded article obtained as Example.
FIG. 15 shows photographs of a primary molded article obtained as Comparative Example.
FIGS. 16A-16D show a component-supporting mold that can be used in the present invention, which is an embodiment different from that shown in FIGS. 3A-3C, wherein FIG. 16A is a plan view, FIG. 16B is a front view, FIG. 16C is a cross sectional view taken along line 16C-16C of FIG. 16A, and FIG. 16D is a perspective view.

### EMBODIMENTS FOR CARRYING OUT THE INVENTION

The following description is based on practical embodiments with reference to the drawings in order to clarify the present invention in more detail.

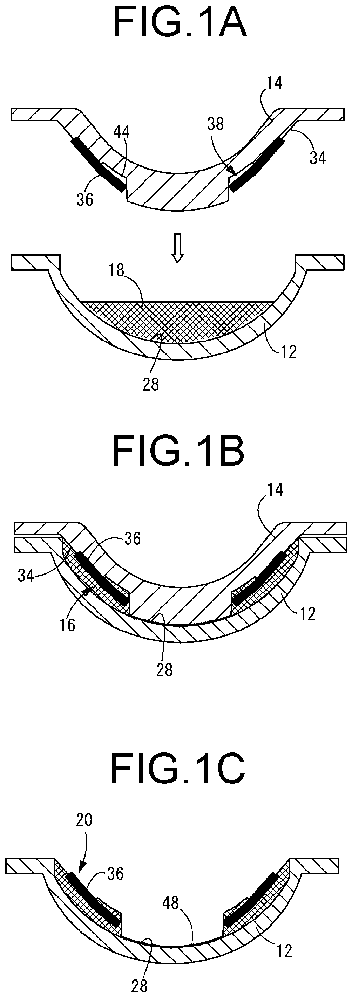

First, FIGS. 1-3 show an overview of a first practical embodiment of a method of manufacturing a contact lens 10 according to the present invention. In the present practical embodiment, the contact lens 10 is manufactured by a two-step molding process for the lens material.

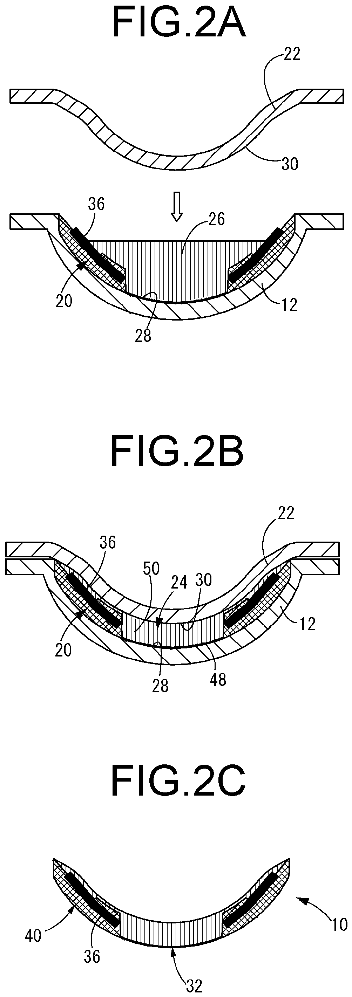

Described more specifically, in the first molding process, as shown in FIGS. 1A-1C, a primary molded article 20 is formed by molding a first molding material 18 within a first molding cavity 16, which is defined by matching a first mold 12 and a component-supporting mold 14. In the subsequent second molding process, as shown in FIGS. 2A-2C, a second molding cavity 24 is defined by matching a second mold 22 with the first mold 12 in place of the component-supporting mold 14, which is removed from the first mold 12 while leaving the primary molded article 20. The contact lens 10 is then obtained as a secondary molded article by molding a second molding material 26 within the second molding cavity 24 in which the primary molded article 20 is left.

In particular, in the present practical embodiment, a lens front surface mold having a concave molding surface 28, which serves as a cavity forming surface, is employed as the first mold 12. The concave molding surface 28 provides a lens front surface comprising a convex surface of an approximately spherical cap shape. Besides, a lens back surface mold having a convex molding surface 30, which serves as a cavity forming surface, is employed as the second mold 22. The convex molding surface 30 provides a lens back surface comprising a concave surface of an approximately spherical cap shape. These first mold 12 and second mold 22 have the respective molding surfaces 28, 30 shaped to achieve the required optical characteristics, and can provide vision correction and other functions as required for the optical region that is located at a center portion 32 of the contact lens 10 and transmits the light rays of the eye optical system.

Meanwhile, a cavity forming surface 34 of the component-supporting mold 14 is not limited to a specified shape according to the required optical characteristics, since it does not provide a lens surface, but has a convex shape of an approximately spherical cap that approximately corresponds to the concave molding surface 28 of the first mold 12. The first molding cavity 16, which is defined by the first mold 12 and the component-supporting mold 14, and hence the primary molded article 20, has a thickness dimension smaller than that of the contact lens 10, which is the secondary molded article, approximately throughout its entirety. This allows the back surface of the primary molded article 20 to be covered with the second molding material 26 approximately throughout its entirety.

The first mold 12, the second mold 22, and the component-supporting mold 14 are not limited in material. Suitably, resin molds are employed rather than metal molds. More specifically, thermoplastic resins such as polypropylene, polyethylene, polystyrene, polycarbonate, polyethylene terephthalate, polyamide, polyacetal, and polyvinyl chloride are generally available as mold materials. The same material can be used for each mold, but different materials and surface properties can also be employed.

The component-supporting mold 14 includes, at the cavity forming surface 34, a support part 38 for a component to be embedded 36 that is separately manufactured and prepared. For example, any component can be used as the component 36 to provide a specific function to the contact lens 10, and specifically, electronic elements such as sensors, cameras, projectors, batteries, antennas, and computing devices to realize a smart contact lens can be adopted as the component 36. For the purpose of avoiding any effect on visibility, etc., the location of the component 36 in the component-supporting mold 14 is generally set at a peripheral portion 40 that is off the center portion 32, which is the optical region, to the outer peripheral side. However, depending on the component, such as a projector that displays information visibly, the component 36 may be placed at the center portion 32.

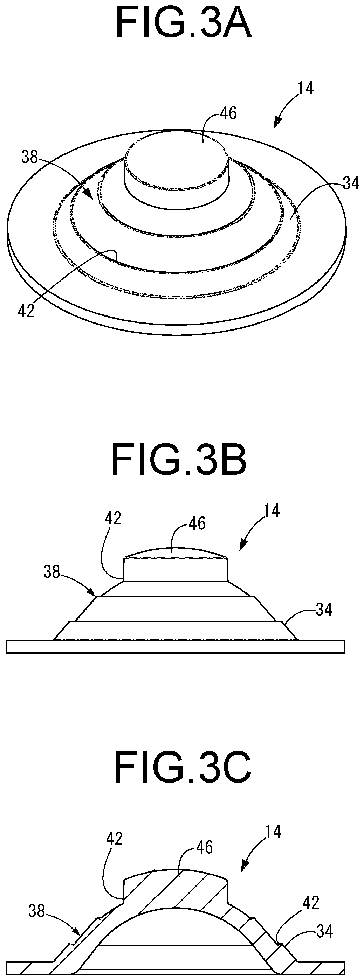

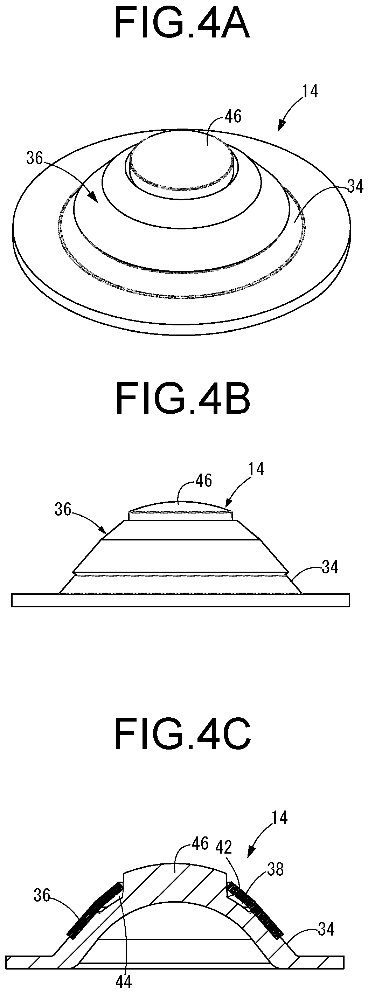

The specific structure of the support part 38 is not limited and can be configured, for example, by having the component 36 supported in an affixed state including bonding, welding, printing, etc. However, in the present practical embodiment, as shown in FIGS. 3A-3C, the support part 38 of concave shape is formed so as to open at the cavity forming surface 34 of the component-supporting mold 14. Then, as shown in FIGS. 4A-4C, the component 36 is set so as to be fitted into the concave support part 38, so that the outer peripheral end of the component 36 is positioned and supported at a predetermined position so as to be hooked against an engaging part 42 constituted by the peripheral wall of the concave support part 38. The specific shape and size of the support part 38 with the engaging part 42 can be set appropriately according to the component 36. A plurality of independent concave and convex support parts 38 corresponding to the shape of the component 36 can be provided in order to engage the component 36 at multiple locations. Besides, a plurality of support parts 38 may be provided in order to set a plurality of components 36. Further, the support part 38 may employ affixing in combination with geometric engagement to have the component 36 supported by the cavity forming surface 34.

The support strength of the support part 38 to support the component 36 is acceptable as long as, for example, the component 36 will not fall off even if the component-supporting mold 14 is inverted from the state as shown in FIG. 4B to the state as shown in FIG. 1A and further matched into the first mold 12. The support strength is set such that, at least when the component-supporting mold 14 is removed from the first mold 12 after molding the first molding material 18, the component 36 is separated from the component-supporting mold 14 and inserted into the primary molded article 20.

By the component 36 being attached to and supported by the component-supporting mold 14 in this manner, the component 36 can be set in the predetermined position within the first molding cavity 16 when the first molding material 18 is molded, as shown in FIGS. 1A-1B. Then, by filling the first molding cavity 16 with the first molding material 18 and performing molding as described above, the primary molded article 20 can be formed as a molded article in which the component 36 is inserted.

In such primary molded article 20, the component 36 may be inserted in an embedded state of being completely embedded inside, or may be partially exposed on the molding surface side by the component-supporting mold 14, which is the lens back surface side. Since the molding surface side by the concave molding surface 28 of the first mold 12 is the front surface of the contact lens 10, it is desirable to avoid exposing the component 36 from the viewpoint of ensuring good wearing feeling, etc.

In the present practical embodiment, with the component 36 supported in the component-supporting mold 14, a gap-like cavity 44 is set between the component 36 and the component-supporting mold 14, either partially (suitably, near the radially inner portion of the peripheral portion 40, which is relatively thickened) or approximately entirely. By the first molding material 18 being actively extended to the surface side of the component 36, at least a portion of the surface of the component 36, or preferably approximately the entire surface thereof, is covered with the first molding material 18 in an approximately film-like manner.

In the present practical embodiment, a center convex part 46 is formed in the center portion of the cavity forming surface 34 of the component-supporting mold 14. The outer circumferential surface of this center convex part 46 forms the engaging part 42 with a large (high in the thickness direction of the mold) stepped surface that is advantageous for positioning the component 36. In addition, the protruding distal end face of the center convex part 46 is brought close to or into contact with the center portion of the cavity forming surface 34 of the first mold 12 when the molds are matched, thereby achieving improvement in shape stability and dimensional accuracy of the first molding cavity 16 with the molds matched. In the present practical embodiment, as shown in FIGS. 1C and 2B, a slight gap is set in the first molding cavity 16 so as to spread between the concave molding surface 28 of the first mold 12 and the protruding distal end face of the center convex part 46 of the component-support mold 14 with an approximately constant thickness, so that a thin surface coat 48 spread over the surface of the center portion 32 is formed along the concave molding surface 28 of the first mold 12.

Meanwhile, the present invention is not limited by the material employed. The first molding material 18 can be any of various types of contact lens materials, depending on the characteristics required of the product, the contact lens 10. For example, monomers and the like known as polymerizable compositions for contact lens molding can be employed.

As an example for reference, as molding materials for hard lenses, various types of conventionally known materials for hard contact lenses can be employed. For example, hard contact lens materials comprising a polymerizable composition comprising methyl (meth)acrylate (MMA) or the like can be employed. In preferred practice, highly oxygen-permeable hard contact lens materials (RGP) obtained from polymerizable compositions such as a siloxane-containing monomer system, a fluorine-containing monomer system, and a styrene-based monomer can be employed.

Meanwhile, as molding materials for soft lenses, various types of conventionally known materials for soft contact lenses can be employed. For example, hydrogel soft contact lens materials obtained from polymerizable compositions comprising hydroxy group-containing alkyl (meth)acrylate, alkyl (meth)acrylamide, N-methyl lactam, etc., and non-hydrogel soft contact lens materials obtained from polymerizable compositions comprising alkyl (meth)acrylate, etc., and silicone-containing hydrogel or non-hydrogel soft contact lens materials obtained from polymerizable compositions comprising a silicone-containing monomer, a silicone-containing macromer, etc., can all be employed.

In the present practical embodiment, however, it is desirable to employ a monomer that can control curing treatment by polymerization, at least as the first molding material 18. For example, when employing a polymerizable monomer as the first molding material 18 and applying the curing treatment by polymerization in a known manner, it is suitable to perform the curing treatment by thermal polymerization by heating, photopolymerization by irradiation with light such as UV light, a combination thereof, or the like.

The specific method varies depending on the polymerizable monomer and the material of the mold, etc., but for thermopolymerizable monomers, the process can be carried out by employing a thermal polymerization initiator (e.g., persulfate, peroxide, or azo-based initiators, etc.) as necessary, and applying heat in the temperature range of 30-120°C for several minutes or several hours by gradually increasing the temperature from near room temperature, for example. For photopolymerizable monomers, the process can be carried out by employing a photopolymerization initiator (e.g., phenone-based, phosphine oxide-based, benzoin-based, thioxanthone-based, or oxime-based photopolymerization initiators, etc.) as necessary, and irradiating the monomer with active energy (electromagnetic waves) such as light rays and electron beams.

Then, in the state where the curing treatment by polymerization on the first molding material 18 in the first molding cavity 16 is incomplete at least on the surface on the side which is in contact with the cavity forming surface 34 of the component-supporting mold 14, the polymerization molding of the primary molded article 20 is completed with the molds closed. The component-supporting mold 14 is then removed from the first mold 12 and the primary molded article 20 to open the molds. At the time of this mold opening, the curing treatment of the first molding material 18 has progressed to the extent that the overall shape of the primary molded article 20 is retained in an adhered state to the first mold 12. In the primary molded article 20 after the mold opening, the curing treatment of the first molding material 18 has progressed to the extent that the component 36 can be held in the predetermined position. That is, in the primary molded article 20 after the mold opening, the component 36 is held in an embedded state (including a partially embedded state) in the first molding material 18. In the contact area of the component 36 with the first molding material 18, the surface of the component 36 is in an adhered state to the first molding material 18 without gaps.

The first molding material 18 is in a soft state where curing is incomplete, at least on the surface on the side where the component 36 is located, so that shrinkage due to the curing treatment of the first molding material 18 is avoided (does not occur) or suppressed (is not completed). Therefore, at least in the vicinity of the place of the component 36, the occurrence of a large pressure decrease in the first molding cavity 16 is avoided. By removing the component-supporting mold 14 and opening the first molding cavity 16, the subsequent curing of the first molding material can progress without any decrease in pressure in the primary molded article 20. As a result, the occurrence of molding defects in the primary molded article 20, especially voids, partially peeled coatings, or the like near the component 36, which are thought to be caused by decrease in pressure in the first molding cavity 16, can be suppressed.

The degree of incomplete curing of the first molding material 18 at the time when the component-supporting mold 14 is removed is sufficient as long as the curing has progressed to the extent that the component 36 can be held in the desired position in the first molding material 18. This is because the dimensional accuracy of the first molding material 18 at this point is achieved by the molding of the second molding material 26 described later. The state of incomplete curing of the first molding material 18 can be understood, for example, as a state in which there is more residual monomer or a state in which the degree of curing is less in comparison with the state in which curing is completed, or a state in which the curing treatment process is completed earlier than the expected time of curing completion. As described above, the degree of incomplete curing of the first molding material 18 at the time when the component-supporting mold 14 is removed is acceptable as long as the curing stops at a degree where shrinkage of the first molding material 18 does not create a problem. For example, it is acceptable as long as holding of the component 36 is realized in the desired position by the position, form, and the like of the holding of the component 36, even if the polymerization on the component-supporting mold 14 side has hardly progressed. On the other hand, in the case where the shrinkage due to curing occurs significantly in the final step of curing depending on the material or the like, the polymerization on the component-supporting mold 14 side may have considerably progressed. As will be understood from the preceding discussion, as an example only, regarding the first molding material 18 at the time when the component-supporting mold 14 is removed, it is preferable that the region where a hardness value (e.g., ASTM_D_2240), which is measured by the indentation depth of the indenter with a durometer or Barcol, is not more than 80% of the hardness when the curing reaction of the first molding material 18 is completed remains at least partially on the surface on the component-supporting mold 14 side, and more preferably, the region where such hardness percentage is not more than 50% remains at least partially on the said surface.

Suitably in the present embodiment, the polymerization progress of the first molding material 18 in the first molding cavity 16 is partially controlled. Specifically, the polymerization progress in the first molding material 18 filling the first molding cavity 16 is controlled so as to be slower on the cavity forming surface 34 side of the component-supporting mold 14 than in other portions. Such control of the polymerization progress can be performed, for example, if the polymerization of the first molding material 18 is thermal polymerization, by exposing the convex outer surface of the first mold 12 to a heat source and heating the first molding material 18 from the first mold 12 side, or the like. Meanwhile, for example, if the polymerization of the first molding material 18 is photopolymerization, the control can be performed by irradiating the active energy from the first mold 12 side through the first mold 12 to the first molding material 18, or the like. Incidentally, thermal polymerization and photopolymerization can be realized by appropriate polymerization initiators. Thermal polymerization initiators include persulfate, peroxide, azo-based initiator, etc., while photopolymerization initiators include, for example, phenone-based or other photopolymerization initiators, as described above. Such polymerization methods and initiators can be appropriately selected in consideration of the polymerizable composition and the mold material, etc., and shall not be construed as limited.

By so doing, regarding the primary molded article 20 at the time of mold opening, the component-supporting mold 14 side has the slowest polymerization progress to be soft, while the first mold 12 side has sufficient polymerization progress so that the curing treatment is completed or approximately completed.

At the time of mold opening, in order to more reliably embed and hold the component 36 in the primary molded article 20 for which curing is incomplete on the component-supporting mold 14 side and to better demold the component-supporting mold 14 from the primary molded article 20, it is desirable to appropriately set fitness (adhesion) of the first molding material 18 with respect to the component 36 and/or the component-supporting mold 14.

That is, it is suitable to select and set the material of the component-supporting mold 14 so that the adhesion of the component-supporting mold 14 with respect to the first molding material 18 is smaller than the adhesion of the component 36 with respect to the first molding material 18, considering the materials of the first molding material 18 and the component 36. Since the degree of fitness (adhesion) here is a relative comparison of the component-supporting mold 14 and the first molding material 18 with respect to the component 36, it can be confirmed without much effort or time required by conducting individual comparison tests on the materials that are expected to be used.

This can effectively prevent molding defects due to partial peeling or roughness on the surface of the component-supporting mold 14 side of the primary molded article 20 when the component-supporting mold 14 is removed. In addition, even if, for example, the primary molded article 20 is subjected to sink marks or other defects due to excessive progress of the curing treatment of the first molding material 18 during removal from the component-supporting mold 14, by the primary molded article 20 (the first molding material 18 and the component 36) being actively separated from the cavity forming surface 34 of the component-supporting mold 14, the molding defects in the primary molded article 20 can be reduced or avoided.

After the primary molded article 20 has been produced by the first molding process shown in FIG. 1 as described above, a second molding process is then performed in the presence of the said primary molded article 20. In the second molding process, as described above, as shown in FIGS. 2A-2C, the second mold 22 including the convex molding surface 30 that provides the lens back surface is matched with the first mold 12 in which the primary molded article 20 has not been demolded and is adhered to be left on the concave molding surface 28, so as to define the second molding cavity 24. Then, the second molding cavity 24 is filled with the second molding material 26, and the second molding material 26 is subjected to the curing treatment to be molded by irradiation with, for example, heat rays, light rays, or the like, thereby obtaining the contact lens 10 as an integrally molded product in which the component 36 is embedded by molding the molding materials in multiple steps.

When the second molding material 26 is cast in the second molding process, the curing of the first molding material 18 may have been completed in the primary molded article 20, or may not have been completed as long as the prescribed positioning and holding accuracy with respect to the component 36 can be achieved. After the component-supporting mold 14 is removed from the primary molded article 20 in the first molding process, if needed, the curing of the first molding material 18 may be progressed or completed by irradiating the primary molded article 20 with energy such as heat rays and electromagnetic waves from the surface side where the component 36 is arranged, for example.

Similarly to the first molding material 18, the second molding material 26 employed in the second molding process can be any of various types of contact lens materials, depending on the characteristics required of the product, the contact lens 10. For example, monomers and the like known as polymerizable compositions for contact lens molding can be employed. The first molding material 18 and the second molding material 26 can employ the same monomer and can thereby be highly or completely integrated, but the first molding material 18 and the second molding material 26 can be mutually different. For example, the first molding material 18 may emphasize adhesion to the component 36, while the second molding material 26 may emphasize compatibility (lubricity, etc.) with the cornea or other living bodies, so that the molding materials are selected separately according to different required characteristics.

Furthermore, in the present practical embodiment, since the second molding material 26 cooperates with the first molding material 18 to constitute the center portion 32 that is arranged on the optical path of the eye optical system, a material having transparency to visible light rays is adopted. However, if the optical region of the center portion 32 that is arranged on the optical path of the eye optical system is formed by either one of the first molding material 18 and the second molding material 26, the other of them need not be transparent and may be selected in consideration of biocompatibility for contact with eyeballs or eyelids.

The second molding cavity 24, which is defined between the matched surfaces of the first mold 12 and the second mold 22 in the presence of the primary molded article 20, extends over at least the exposed portion of the component 36 in the primary molded article 20, as shown in FIG. 2B, and is suitably provided to spread over the region entirely covering the component 36. In the present practical embodiment, the second molding cavity 24 spreads to entirely cover the back surface (the spherical cap-shaped concave surface) of the primary molded article 20.

In the present practical embodiment in particular, the outer peripheral end of the primary molded article 20 and the outer peripheral end of the second molding cavity 24 both extend up to the outermost edge of the contact lens 10. With this arrangement, the entire contact lens 10 has a laminated-type composite structure in which the molded bodies of the first molding material 18 and the second molding material 26 are overlapped with each other in the lens thickness direction.

In this way, by defining the second molding cavity 24 on the back surface side of the primary molded article 20 and molding the second molding material 26, the second molding material 26 covers the component 36, which is embedded and inserted at least on the front side into the primary molded article 20, on the back side. Therefore, in the molded article obtained by applying the curing treatment to the second molding material 26, the component 36 is in an embedded state of being completely embedded inside without being exposed on the surface.

Subsequently, the first mold 12 and the second mold 22 are opened, and the molded article is demolded, thereby obtaining the desired contact lens 10. After demolding, finishing treatments such as deburring, polishing, degreasing, washing, and sterilization can be applied as necessary.

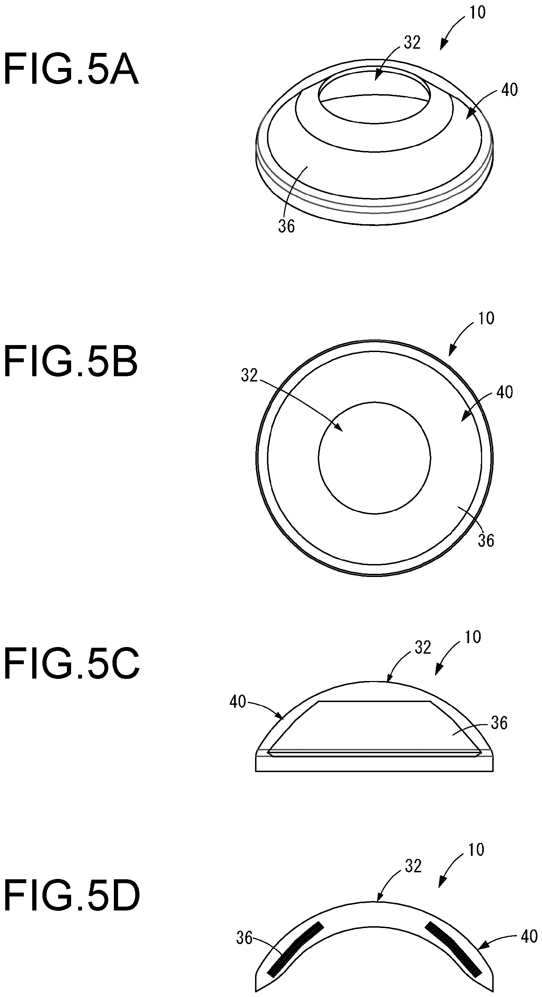

The contact lens 10 obtained in this way is an insert-molded article in which the component 36 is placed in an embedded state in a predetermined position, as shown in FIGS. 5A-5D. In the said contact lens 10, the back surface of the primary molded article 20 is covered with the second molding material 26 and molded. Thus, even if the back surface of the primary molded article 20 has sink marks or surface roughness due to the component-supporting mold 14 being removed with the curing being incomplete, the molding treatment of the second molding material 26 can eliminate these defects, and a contact lens 10 of good quality can be obtained.

When molding the second molding material 26, it is desirable that the second molding material 26 be demolded after it has been sufficiently cured, so that the dimensional accuracy of the molded article, the contact lens 10, can be reliably obtain to an even higher degree. When the curing treatment of the second molding material 26 is progressed in the second molding cavity 24 formed by closing the first mold 12 and the second mold 22, it is easy to set sufficiently good compatibility between the first molding material 18 and the second molding material 26 by selecting each molding material. Besides, since the component 36 has already been embedded in the first molding material 18 and the contact area with the second molding material 26 is minimized and the like, even if polymerization shrinkage of the second molding material 26 occurs, the occurrence of voids, etc. inside the lens (between the primary molded article 20 and the second molding material 26) can be suppressed.

Indeed, in consideration of molding accuracy and molding stability of the second molding material 26, it is preferable for the second mold 22 to employ a material with low fitness (adhesion) with respect to the second molding material 26, for example. This makes it possible to more effectively suppress molding defects such as voids and roughness of the molding surface even if, for example, relatively large polymerization shrinkage or the like occurs during molding of the second molding material 26.

In adjusting the adhesion of the molding surfaces (the cavity forming surfaces) 28, 30, 34 of the second mold 22, the first mold 12 and the component-supporting mold 14 described above to the molding materials 18, 26, by selecting the material of the mold, for example, it is possible to adjust the adhesion to the first molding material 18 and the second molding material 26. Specifically, for example, when manufacturing a hydrogel lens, the polymerizable composition, which is the molding material, contains a hydrophilic monomer, etc. Therefore, by adopting a hydrophilic monomer such as polyamide as the material of the mold, high adhesion to the molding material on the cavity forming surface can be achieved. Meanwhile, by adopting a hydrophobic material such as polypropylene as the material of the mold, the adhesion to the molding material on the cavity forming surface can be set low.

Other treatments can also be applied to the cavity forming surfaces 28, 30, 34 of the molds, for example, to modify the characteristics related to adhesion. By performing surface property adjustment treatments such as plasma treatment, UV irradiation, corona discharge, laser irradiation, and application of a surfactant, the adhesion to the molding materials 18, 26 can be increased or decreased. Further, the adhesion to the molding materials 18, 26 can also be adjusted by heating or cooling the first mold 12, the second mold 22, and the component-supporting mold 14 to control the temperature.

The contact lens 10 comprising an integrally molded product in which the component 36 is inserted can provide a soft contact lens, a hard contact lens, or the like that is worn by being overlapped on the cornea, which are well known, but can also provide a scleral lens that is worn with the lens edge positioned on the sclera outside of the cornea. In a scleral lens, the size of the region covering the sclera can be set freely. For example, if the lens covers the sclera over a wide range, for example, the outer peripheral configuration of the lens edge may be non-circular. For example, if it is desired to precisely position the component 36 on the eyeball in a worn state, a scleral lens that can minimize movement on the eyeball in the worn state is suitable.

Meanwhile, the contact lenses 10 comprising an integrally molded product in which the component 36 is inserted often has a large lens thickness dimension. In such cases, not only for continuous wear over several days, but also for daily use where the lens is worn over the course of a day from waking up to bedtime, it is desirable to ensure sufficient oxygen permeability in the contact lens.

Specifically, for example, when manufacturing the contact lens 10 as a scleral lens in the aforementioned practical embodiment shown in FIGS. 1A-5D, it is also preferable to employ RGP (a hard contact lens material with high oxygen permeability) as the first molding material 18 so as to reliably obtain positioning accuracy of the component 36, while employing more oxygen-permeable lens materials such as a monomer such as silicone-containing (meth)acrylate or a silicone-containing macromer as the second molding material 26. In this case, especially in the center portion 32, which is located on the cornea, by making the lens thickness defined by the second molding material 26 thicker than that defined by the first molding material 18, it is possible to provide the contact lens 10 with higher oxygen permeability.

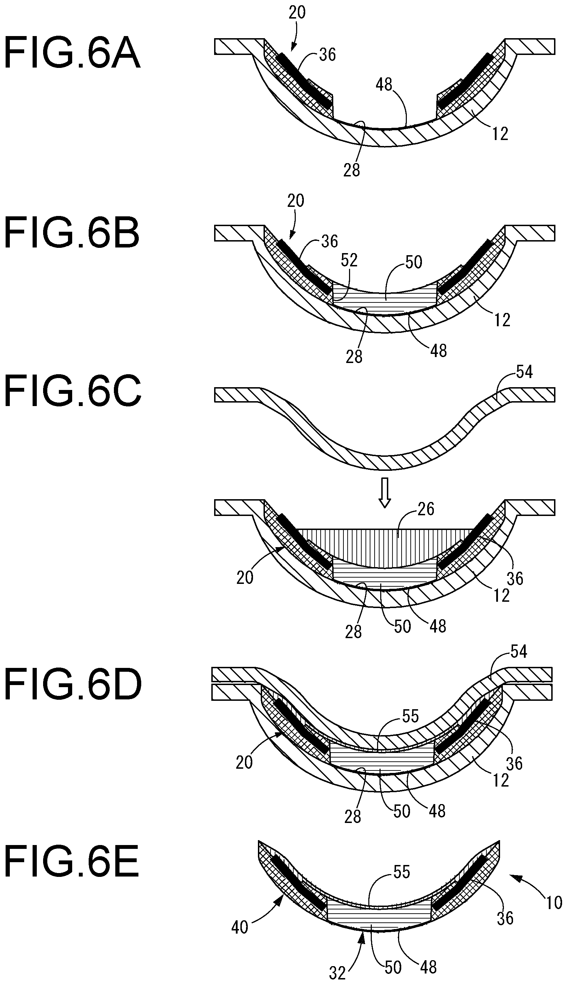

Considering the compatibility between high oxygen permeability and good wearing comfort, a second practical embodiment shown in FIG. 6 is suitable. In the following practical embodiments, components, parts, and processes like those in the preceding first practical embodiment will not be discussed in detail.

In such a second practical embodiment, the primary molded article 20 shown in FIG. 6A is obtained by the same process as in FIGS. 1A-1C of the first practical embodiment. Then, before molding the second molding material 26, as shown in FIG. 6B, for the said primary molded article 20, which is in an adhered state to the first mold 12, an intermediate member 50 molded from a different material from the first and the second molding materials 18, 26 and serving as an intermediate molded article is placed.

In the present practical embodiment, a hard lens material is employed as both of the first and second molding materials 18, 26, thereby improving the positional stability of the contact lens 10 in the worn state, and hence the positioning accuracy of the component 36 to be embedded. Suitably, a hydrophilic highly oxygen-permeable material (RGP) is employed as the first and second molding materials 18, 26. On the other hand, the intermediate member 50 is a lens material with higher oxygen permeability than the first and second molding materials 18, 26, and is formed of a silicone material including, for example, a monomer such as silicone-containing alkyl (meth)acrylate or a silicone-containing macromer.

In the present practical embodiment, the center convex part 46 (see FIGS. 1A-1B) provided to the component-supporting mold 14 forms a center recess 52 in the area where the optical part is formed in the primary molded article 20. The intermediate member 50 is assembled in an inserted state into this center recess 52.

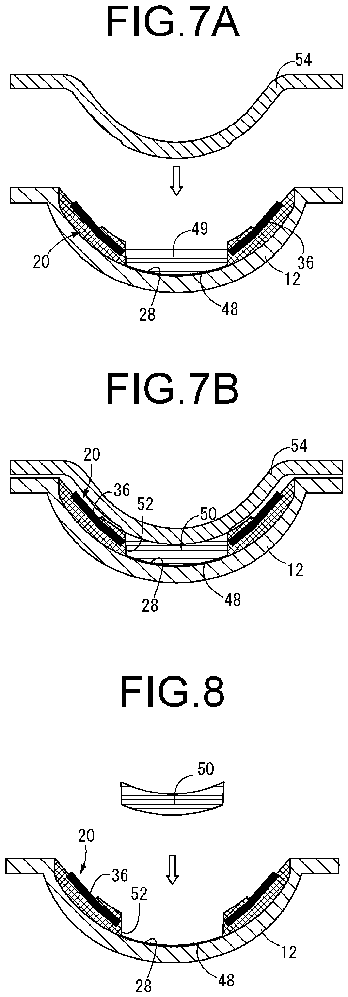

Such assembly of the intermediate member 50 to the primary molded article 20 can also be performed by integrally molding the intermediate member 50 with the primary molded article 20 by molding in the presence of the primary molded article 20, as shown in FIGS. 7A-7B, for example. Specifically, as shown in FIG. 7A, an intermediate molding material 49 having high oxygen permeability and containing silicone as described above is injected as a third molding material into the first mold 12 while the primary molded article 20 is left in an adhered state to the first mold 12 without being demolded after molding the primary molded article 20. Then, as shown in FIG. 7B, an intermediate mold 54 serving as an auxiliary mold is matched with the first mold 12, and an intermediate molding cavity defined on the back surface side of the primary molded article 20 is filled with the intermediate molding material and the curing treatment is performed to obtain the primary molded article 20 in which the intermediate member 50 is integrally assembled in an adhered state.

The cavity forming surface of the intermediate mold 54 (the molding surface of the intermediate member 50) entirely protrudes further toward the first mold 12 side than the cavity forming surface of the second mold 22 (the molding surface of the second molding material 26) used for molding of the second molding material in the subsequent process does. With this configuration, the back surface of the intermediate member 50, which is molded by the intermediate mold 54, does not provide the back surface of the contact lens 10, and the back surface of the intermediate member 50 is covered with the second molding material layer approximately in its entirety by the molding of the second molding material carried out in the subsequent process. The material of the intermediate mold 54, similarly to the other molds, is not limited in particular, and acceptable as long as it can be removed from the first mold 12 and opened after molding the intermediate member 50, leaving the primary molded article 20, to which the intermediate member 50 is attached, in the first mold 12.

Incidentally, as the intermediate member 50, it is also possible to employ an intermediate member 50 separately formed by using a predetermined mold, cutting out from a block, or the like as shown in FIG. 8. Such separately formed intermediate member 50 is attached to the center portion of the primary molded article 20 by being inserted into the center recess 52 of the primary molded article 20 left in the first mold 12 in an adhered state.

After assembly of the intermediate member 50 as described above, the second molding material 26 is molded using the intermediate mold 54, as shown in FIGS. 6B-6E. Such molding can be performed according to FIGS. 2A-2C in the first practical embodiment. In such molding, the primary molded article 20 including the component 36 and the back surface of the intermediate member 50 are entirely covered with the second molding material 26. Therefore, in the obtained contact lens 10, exposure of both the component 36 and the intermediate member 50 to the lens surface is avoided.

Here, in the primary molded article 20 to which the intermediate member 50 is attached, even if unevenness exists on the back surface side, roughness or the like exists on the surface of the intermediate member 50, or a gap exists between the intermediate member 50 and the primary molded article 20, these defects will be corrected by molding the second molding material 26 filling the back surface side of the primary molded article 20 including the intermediate member 50, thereby avoiding any adverse effects on the product, namely the contact lens 10.

In the contact lens 10 obtained in this way, the oxygen permeability, especially in the center portion 32, can be improved by the intermediate member 50, which comprises a silicone-based material and is laminated so as to be sandwiched between RGP materials in the lens thickness direction with an embedded structure. In particular, by making the thickness dimension of the intermediate member 50 larger than the thickness dimension of the RGP material on the lens front and back surfaces, the oxygen permeability can be more effectively ensured.

Discussing specifically, considering the oxygen permeability of general RGP materials, when satisfying the recommended level of oxygen permeability (Dk value) in daily use, if the maximum lens thickness of the center portion 32 exceeds 0.7 mm, it becomes difficult to achieve a single-layer structure of RGP material. Therefore, it is highly significant to adopt the laminated structure described in the present practical embodiment for the contact lens 10 with a maximum lens thickness of the center portion 32 being greater than 0.7 mm. Besides, in the center portion 32, it is effective to keep the total thickness of RGP material not greater than 0.7 mm, and it is desirable that the lens thickness required for embedding the component 36 be actively ensured by the intermediate member 50.

In the peripheral portion 40 of the contact lens 10, especially the outer peripheral portion where the lens thickness is smaller, there is almost no problem with oxygen permeability. Thus, the said outer peripheral portion may have a single structure of RGP material comprising the first molding material 18 and/or the second molding material 26 with no center portion 32 sandwiched therebetween.

In the practical embodiment of the contact lens 10, the front and back surfaces of the intermediate member 50 made of silicone material are covered by surface coats 48, 55 made of RGP material, which prevents direct contact of the intermediate member 50 with a living body surface (a cornea or an eyelid) in the worn state. Therefore, while achieving excellent oxygen permeability with the intermediate member 50, it is also possible to avoid a decrease in the wearing feeling caused by the water repellency of the intermediate member 50, its adsorptive property to the living body surface, or the like, thereby realizing a good lens wearing feeling based on the hydrophilicity of the RGP material and its lubricity with the living body.

However, in a contact lens 10 such as a scleral lens, it is also possible to adopt a structure in which, in the worn state, the peripheral portion 40 overlaps the eyeball surface to lift the center portion 32, so that the back surface of the center portion 32 is spaced away from the eyeball and a lacrimal fluid layer is constantly formed, thereby stably avoiding direct contact of the back surface of the center portion 32 with the eyeball. In this case, it would also be acceptable to expose the back surface of the intermediate member 50 directly on the lens back surface without being covered partially or entirely by the second molding material 26, since no direct problem with the wearing feeling arises even if the lens back surface of the center portion 32 is formed of a silicone-based material or the like.

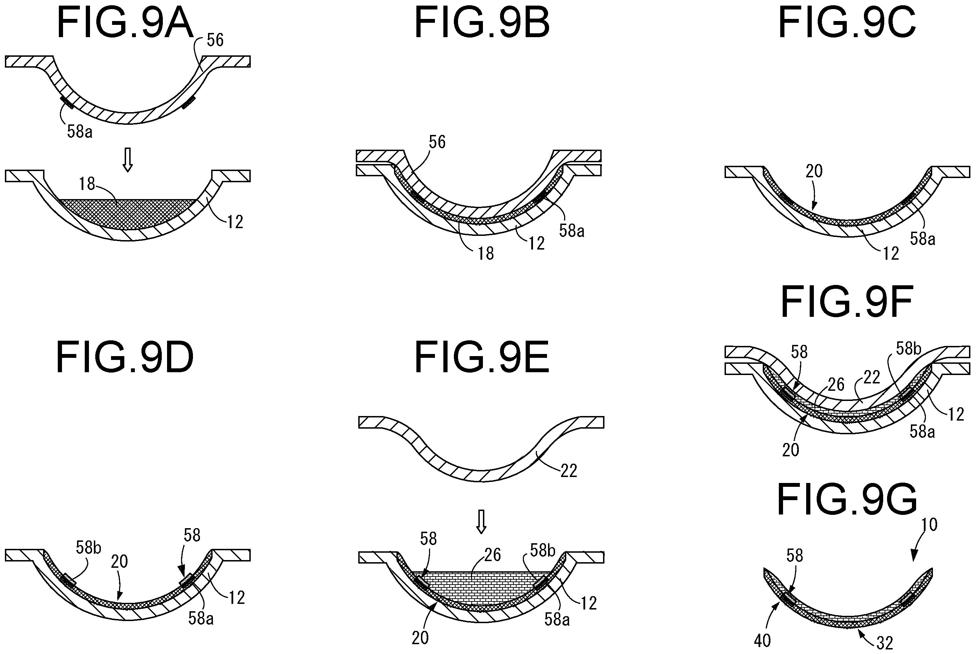

Next, FIG. 9 shows a third practical embodiment of the present invention, which is an example of employing another embodiment of the component to be embedded, which is supported by the component-supporting mold and inserted into the primary molded article. That is, in the preceding first practical embodiment, the component 36 to be embedded is mechanically engaged with and supported by the component-supporting mold 14, and the entire component 36 is supported by the component-supporting mold 14 and integrally molded by being inserted into the primary molded article. In contrast, in the present practical embodiment, a component to be embedded 58 is supported by a component-supporting mold 56 in the state of being affixed to a smooth surface, and a portion of the component 58 is supported by the component-supporting mold 14 and inserted into the primary molded article to be integrally molded, and then the entire component 58 is completed after the primary molded article is molded.

Described more specifically, the component-supporting mold 56 of the present practical embodiment does not include any concave or convex support part on the cavity forming surface 34 for engaging the component to be embedded, and the cavity forming surface 34 has a smooth, spherical shell-like convex shape overall without any concave or convex portion. Such a cavity forming surface 34, when matched with the first mold 12, protrudes further to the first mold 12 side than the cavity forming surface of the second mold 22 does, which defines the molding cavity of the second molding material 26 in the subsequent process, and the cavity forming surface 34 is configured to be positioned close to the first mold 12.

The component 58 is supported at a fixed location by such a cavity forming surface 34 of the component-supporting mold 56 in an affixed state of being adhered by being directly formed on the cavity forming surface 34. In particular, in the present practical embodiment, the component 58 includes a foil-like metal material 58a, such as an antenna and wiring for energization. The foil-like metal material 58a is formed directly on the cavity forming surface 34 by a plating layer of a metallic material.

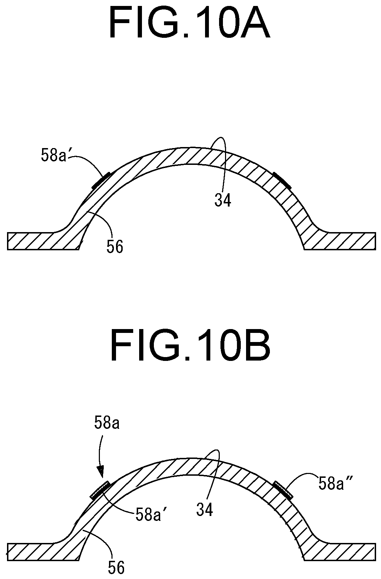

As a specific example, FIGS. 10A-10B show the method of forming the foil-like metal material 58a on the cavity forming surface 34 of the component-supporting mold 56. Since the component-supporting mold 56 is formed of a synthetic resin material such as polyamide and polypropylene, first, a first plating layer 58a' is formed by using an electroless plating method or a direct plating method. It is desirable that the first plating layer 58a' alone is sufficient to form the foil-like metal material 58a with the desired thickness, size, and shape. However, if the first plating layer 58a' alone is not sufficient, then, a second plating layer 58a" is further formed on the first plating layer 58a' in a laminated state to form the desired foil-like metal material 58a. The second plating layer 58a" can be formed by a metal plating method, since it is formed in the presence of the first plating layer 58a' on the cavity forming surface 34 of the component-supporting mold 56.

When forming the first plating layer 58a', generally, first, the cavity forming surface 34 of the component-supporting mold 56 is roughened by a preliminary treatment such as an etching treatment using acid, alkali, or the like, and then a catalyst treatment is applied to the area to be plated on the cavity forming surface 34. In this catalyst treatment, a known catalyst for electroless plating, such as a palladium (Pd)-based catalyst and a Pd-substitute Cu-based catalyst, is stuck to the cavity forming surface 34 of the component-supporting mold 56. The catalyst for electroless plating can be stuck by applying the catalyst to the cavity forming surface 34 by screen printing, pad printing, inkjet printing, or the like, for example. After the catalyst treatment, by performing an electroless plating treatment, the first plating layer 58a' can be formed on the surface to which the catalyst for electroless plating is printed.

The material of the first plating layer 58a' and the second plating layer 58a" can be selected from metals for plating with small ionization tendency, such as nickel (Ni), copper (Cu), gold (Au), silver (Ag), etc. In addition, iron (Fe) can also be employed for the second plating layer 58a". It is also possible to form a plurality of different metal layers in a laminated configuration.

In particular, in the present practical embodiment, as shown in FIGS. 10A-10B, a catalyst for electroless plating is stuck to the cavity forming surface 34 of the component-supporting mold 56 by printing or the like to form the first plating layer 58a' by electroless plating, and then, the second plating layer 58a" is formed by electroless plating to form the foil-like metal material 58a. Subsequently, as shown in FIGS. 9A-9C, the component-supporting mold 56 is matched with the first mold 12 and the first molding material 18 is molded to obtain the primary molded article 20 in which the foil-like metal material 58a is inserted. When molding the first molding material 18, it is desirable, as in the first practical embodiment, to remove the component-supporting mold 56 and release the restraint on the surface of the first molding material 18 before the curing of the first molding material 18 is completed.

In the primary molded article 20 obtained in this way, the foil-like metal material 58a is inserted in an embedded state, and in particular, the cavity forming surface 34 of the component-supporting mold 56 has a smooth surface shape. Thus, the back surface of the primary molded article 20 after the component-supporting mold 56 is removed can be made flush (a continuous surface connected smoothly without any step) with the surface of the primary molded article 20.

If the foil-like metal material 58a alone constitutes the desired component to be embedded, the second molding material 26 may be molded immediately after the primary molded article 20 is molded as shown in FIG. 9E. However, in the present practical embodiment, as shown in FIG. 9D, after the primary molded article 20 is molded, an embedding element 58b such as an electronic element is attached. The embedding element 58b is attached by, for example, being mounted on the foil-like metal material 58a, and the embedding element 58b is made conductive with respect to foil-like metal material 58a, thereby constituting the component 58 of the present practical embodiment including the foil-like metal material 58a and the embedding element 58b.

The embedding element 58b can be mounted by being fixed to the foil-like metal material 58a in an energized state by welding such as brazing, for example. The remaining or presence/absence of the catalyst for electroless plating on the surface of the primary molded article 20 does not hamper the mounting of the embedding element 58b to the foil-like metal material 58a.

However, it is also possible to fixedly support the embedding element 58b, such as an electronic element described above, on the cavity forming surface 34 of the component-supporting mold 56, and to include the embedding element 58b in an embedded state in the primary molded article 20 by molding the first molding material 18. In this case, the embedding element 58b may be fastened to the foil-like metal material 58a by brazing or the like, or may be affixed and supported directly on the cavity forming surface 34 of the component-supporting mold 56.

Next, for the primary molded article 20 in which the component 58 is formed by the plating treatment and the mounting of the embedding element as described above and the component 58 is fastened in a partially embedded state to the primary molded article 20, as shown in FIG. 9E-9F, as in the first practical embodiment, the second molding material 26 is molded in the molding cavity defined by overlapping the second mold 22 with the first mold 12. After such molding, the molds are opened and removed to obtain the contact lens 10 as an integrally molded product in which the component 58 is inserted, as shown in FIG. 9G.

In particular, in the present practical embodiment, the foil-like metal material 58a is exaggerated in the drawings to be thicker than it actually is for ease of understanding, but the thickness dimension of the foil-like metal material 58a formed by the plating layer is not large. Especially when the foil-like metal material 58a alone is used to form the component 58, the back surface of the primary molded article 20 is made flush, thereby reducing unevenness of the back surface of the primary molded article 20. Therefore, molding defects such as voids caused by the component 36 during molding of the second molding material 26 can also be effectively minimized.

Although the practical embodiments of the present invention have been described above, the present invention is not limitedly interpreted based on such practical embodiments.

For example, the preceding practical embodiment illustrates the embodiment in which, when the primary molded article 20 is molded, the component-supporting mold 14 is removed before the curing of the first molding material 18 is completed in order to avoid molding defects such as voids and occurrence of partially peeled coatings around the component 36. However, in order to achieve such an objective, it is also possible to adopt an embodiment that can reduce or avoid cavity depressurization caused by polymerization shrinkage, etc. in the first molding cavity 16 during the molding of the first molding material 18, which is different from the preceding practical embodiment.

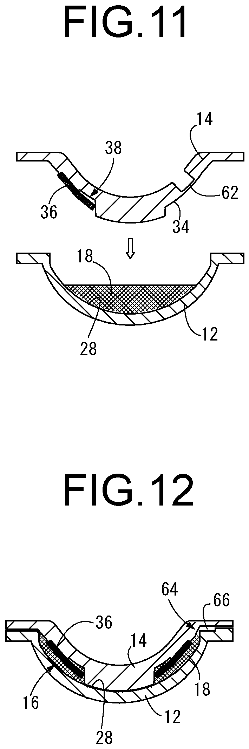

More specifically, for example, as shown in FIG. 11, it would also be acceptable to employ a component-supporting mold 14 in which a flexible wall 62 serving as a flexible portion that is easily deformable is formed at a position away from the support part 38 of the component 36 on the cavity forming surface 34. By molding the primary molded article 20 using such a component-supporting mold 14, when the pressure in the first molding cavity 16 decreases due to polymerization shrinkage of the first molding material 18 or the like, the flexible wall 62 deforms to expand toward the inside of the cavity. This makes it possible to mold the primary molded article 20 in which the component 36 is inserted while reducing or eliminating the pressure drop in the first molding cavity 16.

Also, as shown in FIG. 12, for example, it would also be acceptable to adopt an embodiment in which the component-supporting mold 14 and/or the first mold 12 form an extra-cavity housing part 66 when the molds are matched, and the extra-cavity housing part 66 communicates with the first molding cavity 16 through a communication passage 64 to house an excess amount of the first molding material 18. By adopting such an extra-cavity housing part 66, when polymerization of the first molding material 18 is started in the first molding cavity 16, the excess amount of the first molding material 18 that has filled the first molding cavity 16 and is housed in the extra-cavity housing part 66 can be utilized as a riser, thereby reducing or eliminating the pressure drop in the first molding cavity 16 caused by shrinkage or the like during the polymerization process. The excess portion of the cured riser can be disposed of by cutting away or other means in the same manner as disposing of burrs or the like after molding (suitably after molding the primary molded article or after molding the contact lens).

Alternatively, it would also be acceptable to adopt the component-supporting mold 14 having sufficiently reduced adhesion to the first molding material 18 on the cavity forming surface 34 by material selection, surface treatment, or the like. Specifically, for example, if a hydrophilic monomer or the like is mixed in the first molding material 18, a component-supporting mold 14 comprising a hydrophobic material may be adopted, and furthermore, by performing surface treatments such as plasma treatment, UV irradiation, corona discharge, laser irradiation, application of a surfactant, etc. on the cavity forming surface 34 in addition to smoothing treatment, fitness with respect to the first molding material 18 and the molded article can be lowered.

In controlling the properties of the cavity forming surface 34 as described above, it is also possible to select a composition of the first molding material 18 that has low polymerization shrinkage. For example, by adding a non-reactive substance that is not involved in polymerization to the polymerizable composition used as the first molding material 18, it is also suitable to reduce the pressure drop itself that occurs in the first molding cavity 16 when molding the first molding material 18.

Also, these embodiments (adopting the flexible wall 62, adopting the extra-cavity housing part 66, or controlling the adhesion of the cavity forming surface 34 to the first molding material 18, etc.) and the embodiment shown in the first practical embodiment (removal of the component-supporting mold 14 before the curing of the first molding material 18 is completed) can be adopted by combining any two or more of them. Then, any of the embodiments can be selected and adopted, taking into consideration the degree of pressure drop that occurs in the first molding cavity 16 when molding the first molding material 18.

Furthermore, in the preceding practical embodiment, the first mold 12 includes a molding surface of spherical-cap concave shape for molding the lens front surface, and the component-supporting mold 14 supports the component 36 at the cavity forming surface 34 of approximately corresponding spherical-cap convex shape. However, the present invention is not limited to such an embodiment.

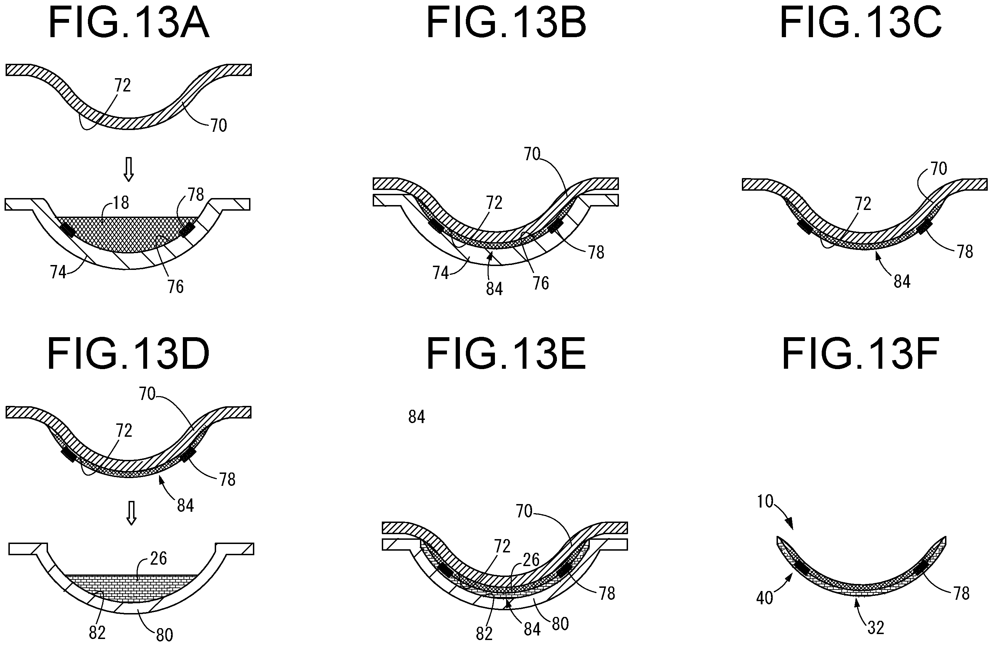

Specifically, as illustrated in FIGS. 13A-13F, as another embodiment, it is also possible to adopt a first mold 70 including a molding surface 72 of spherical-cap convex shape for molding the lens back surface, as well as a component-supporting mold 74 including a molding surface 76 of spherical cap concave shape that approximately corresponds to the said molding surface 72. A component to be embedded 78 is positioned and supported on the said molding surface 76, and the first molding material 18 is molded thereon. In such an embodiment as well, the basic process is the same as in the first practical embodiment, and the component-supporting mold 74 is removed before the curing of the first molding material 18 is completed. Then, a second mold 80 including a molding surface 82 of a spherical-cap concave shape for molding the lens front surface is adopted, and molding of the second molding material 26 is performed between the matched surfaces of the first mold 70 and the second mold 80 in the presence of an integrally molded article 84 of the first molding material 18 in which the component 78 is inserted. This makes it possible to obtain the contact lens 10 as the molded article in which the component 78 is inserted in an embedded state, similarly to the preceding practical embodiment.

Below, a specific example of molding the primary molded article 20, which is a middle molded article in manufacturing the contact lens 10 according to the aforementioned first practical embodiment, will be given as Example for reference.

In Example, molds made of synthetic resin were used as the first mold 12 and the component-supporting mold 14. The component-supporting mold 14 on which the component 36 is positioned and supported was matched with the first mold 12 into which the first molding material 18 is injected, and by curing the first molding material 18, the primary molded article 20, in which the component 36 was inserted, was molded.

A photopolymerizable composition monomer was employed as the first molding material 18, and after the first mold 12 and the component-supporting mold 14 were closed, the first molding material 18 was polymerized by irradiating light for polymerization treatment.

The polymerization treatment by the light irradiation was controlled so that the polymerization of the first molding material 18 preceded on the first mold 12 side and progressed toward the component-supporting mold 14 side by irradiating the light from the first mold 12 side.

Then, the component-supporting mold 14 was removed when the curing treatment of the first molding material 18 was sufficiently progressed on the surface of the first mold 12 side but was not yet completed on the surface of the component-supporting mold 14 side. At this stage, the front surface side of the primary molded article 20 was adhered to and supported by the concave molding surface 28 of the first mold 12. On the other hand, the back surface side of the primary molded article 20 was almost completely embedded in the primary molded article 20 and held in the predetermined position, and it was possible to separate the component-supporting mold 14 from the component 36 to open the molds. Here, curing was incomplete for the surface on the back surface side of the primary molded article 20 demolded from the component-supporting mold 14, and the said surface was approximately gel-like.

Subsequently, the primary molded article 20 was completely cured while still being adhered to the first mold 12 to obtain the molded primary molded article 20 as Example.

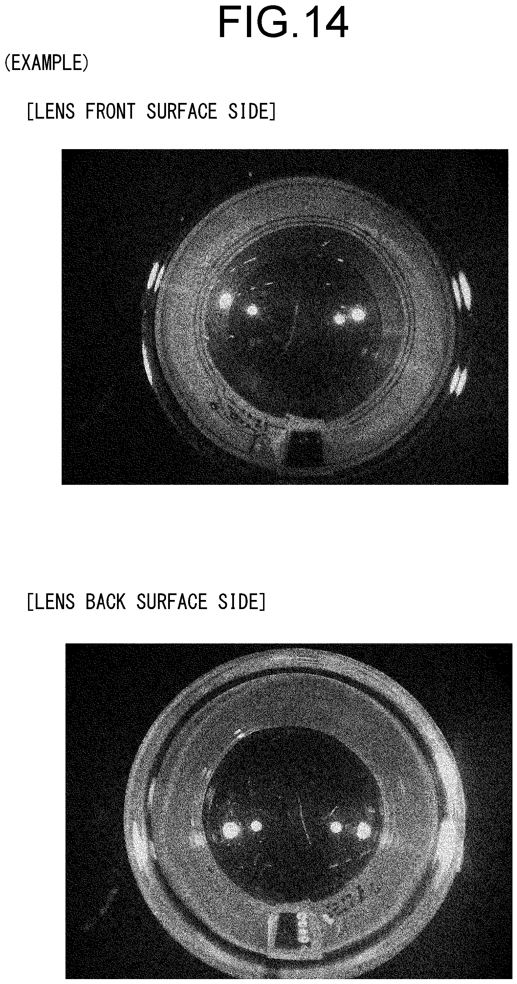

The obtained primary molded article 20 is shown in FIG. 14. It can be seen that the lens front surface side (the convex surface side) and the lens back surface side (the concave surface side) are both in good molded condition with no voids or other defects.

On the other hand, as Comparative Example, the same first molding material 18 as in the aforementioned Example was molded under the same conditions using the component-supporting mold 14, on which the same component 36 as in the aforementioned Example was positioned and supported, and the first mold 12. This time, the polymerization treatment by light irradiation was performed until the first molding material 18 was completely cured, and after the entire first molding material 18 was completely cured, the component-supporting mold 14 was opened and demolded to obtain the primary molded article as Comparative Example.

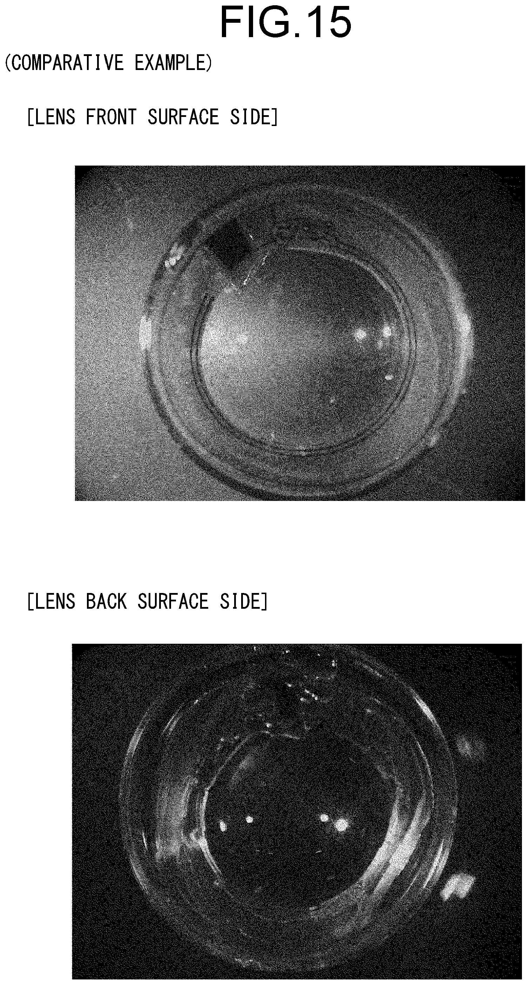

The obtained primary molded article is shown in FIG. 15. In particular, when viewed from the lens back surface side (the concave surface side), many void-like molding defects can be confirmed around the inserted component 36, and a partially peeled film-like defective portion due to large voids can also be observed.

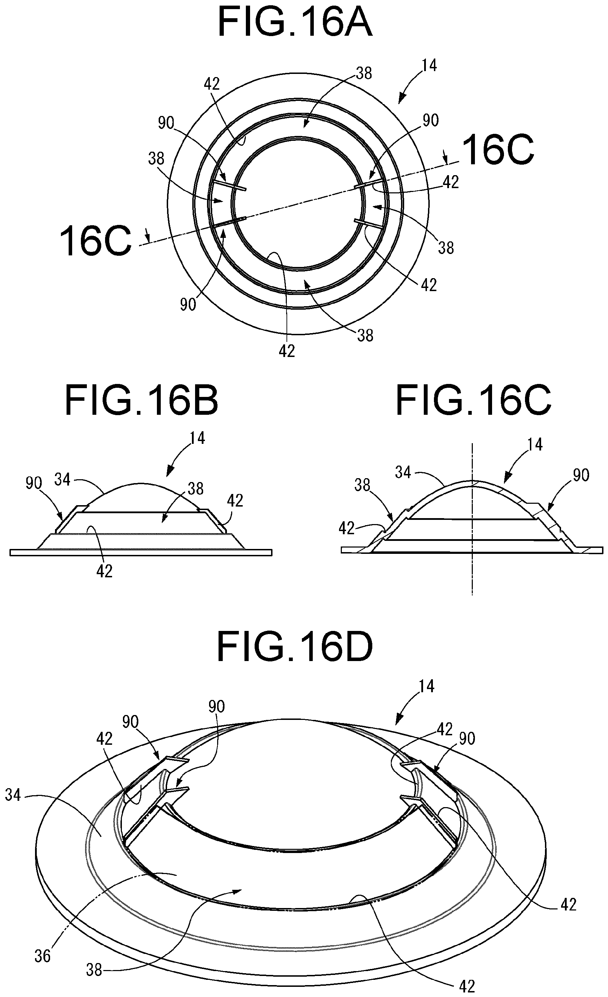

The practical embodiment shown in FIGS. 4A-4C illustrates the embodiment including the concave support part 38, in which the component 36 is set to be fitted and which has the step-shaped engaging parts 42 situated in opposition in the diametrical direction, as a mechanism for positioning and supporting the component 36 in the component-supporting mold 14. However, the positioning and supporting mechanism of the component 36 is not limited. For example, as illustrated in FIGS. 16A-16D, by forming support protrusions 90 extending in the radial direction in the component-supporting mold 14, the opposed surfaces of the support protrusions 90, 90 that are opposite to each other in the circumferential direction constitute engaging parts 42, 42. With this configuration, the component 36 can be attached so as to be fitted into the concave support part 38 formed between those engaging parts 42, 42, whereby the component 36 is positioned and supported by being sandwiched between the engaging parts 42, 42 in the circumferential direction. In FIGS. 16A-16D, as in the component-supporting mold 14 of the practical embodiment shown in FIGS. 4A-4C, the step-shaped engaging part 42 extending in the circumferential direction is also provided, so that the component 36 can be accurately positioned and supported in the radial direction. However, such a step-shaped engaging part extending in the circumferential direction need not necessarily be provided. Besides, in FIGS. 16A-16D, a total of four support protrusions 90, which extend in the radial direction, are spaced apart from each other in the circumferential direction. Thus, a total of four support parts 38 are formed between the support protrusions 90, 90 that are circumferentially adjacent to each other, making it possible to position and support the component 36 to any of the support parts 38.

As described above, the mechanism for positioning and supporting the component 36 in the component-supporting mold 14 by means of the engaging action is not limited with respect to its specific shape, embodiment, structure, or the like. For example, a step may be provided around the support part 38 such that the portion where the component 36 is placed has a concave shape, whereby the outer circumference of the component 36 is positioned and supported entirely or partially by the step. Alternatively, a convex part such as a pin may be provided around the portion where the component 36 is placed such that the outer circumferential surface of the component 36 is engaged with the convex part to be positioned and supported. Moreover, if the component 36 has a hole or a protrusion, it is also possible to position and support the component 36 in the component-supporting mold 14 by engaging a fitting projection projecting from the component-supporting mold 14 with the hole, or by engaging the protrusion with a fitting hole provided in the component-supporting mold 14.

It is also to be understood that the present invention may be embodied with various changes, modifications and improvements which may occur to those skilled in the art, without departing from the spirit and scope of the invention.

### INDUSTRIAL APPLICABILITY

This invention relates to a contact lens with a separate component embedded inside, such as a smart contact lens, and proposes a novel manufacturing method and feature for the contact lens, which can be utilized in industrial fields such as manufacture of the contact lens.

### KEYS TO SYMBOLS

- 10: contact lens
- 12: first mold
- .14: component-supporting mold
- 16: first molding cavity
- 18: first molding material
- 20: primary molded article
- 22: second mold
- 24: second molding cavity
- 26: second molding material
- 28: concave molding surface
- 30: convex molding surface
- 32: center portion
- 34: cavity forming surface (component-supporting mold)
- 36: component to be embedded
- 38: support part
- 40: peripheral portion
- 42: engaging part
- 44: gap-like cavity
- 46: center convex part
- 48: surface coat
- 50: intermediate member
- 52: center recess
- 54: intermediate mold
- 55: surface coat
- 56: component-supporting mold
- 58: component to be embedded
- 58a: foil-like metal material
- 58a': first plating layer
- 58a": second plating layer
- 58b: embedding element
- 62: flexible wall
- 64: communication passage
- 66: extra-cavity housing part
- 70: first mold
- 72: molding surface
- 74: component-supporting mold
- 76: molding surface (component-supporting mold)
- 78: component to be embedded
- 80: second mold
- 82: molding surface (second mold)
- 84: integrally molded product
- 90: support protrusion

## Claims

1. A method of manufacturing a contact lens comprising:
defining a first molding cavity in which a component to be embedded is arranged by matching a component-supporting mold, the component-supporting mold positioning and supporting the component, with a first mold providing one of a lens front surface and a lens back surface;
performing curing treatment on a first molding material filling the first molding cavity to obtain a primary molded article in which the component is inserted, wherein, in a state where curing of the first molding material is incomplete on a side of the component-supporting mold, the component-supporting mold is removed from the first mold while leaving the primary molded article in the first mold;
defining a second molding cavity by matching a second mold providing another of the lens front surface and the lens back surface with the first mold in which the primary molded article is left; and
filling the second molding cavity with a second molding material and performing curing treatment, thereby manufacturing the contact lens as an integrally molded product in which the component is embedded.

2. The method according to claim 1, wherein before the curing treatment of the second molding material, curing of the first molding material is completed.

3. A method of manufacturing a contact lens comprising:
defining a first molding cavity by matching a component-supporting mold with a first mold providing one of a lens front surface and a lens back surface;
performing curing treatment on a first molding material within the first molding cavity to obtain a primary molded article in which a component to be embedded, the component being positioned and supported by the component-supporting mold, is inserted;
after removing the component-supporting mold from the first mold while leaving the primary molded article in the first mold, defining a second molding cavity by matching a second mold providing another of the lens front surface and the lens back surface with the first mold; and
performing curing treatment on a second molding material within the second molding cavity thereby manufacturing the contact lens as an integrally molded product in which the component is embedded, wherein
the component-supporting mold includes:
a support part positioning and supporting the component on a cavity forming surface of the first molding cavity; and
a flexible portion provided to a wall defining the first molding cavity, the flexible portion being allowed to deform due to shrinkage of the first molding material during polymerization molding.

4. A method of manufacturing a contact lens comprising:
defining a first molding cavity by matching a component-supporting mold with a first mold providing one of a lens front surface and a lens back surface;
performing curing treatment on a first molding material within the first molding cavity to obtain a primary molded article in which a component to be embedded, the component being positioned and supported by the component-supporting mold, is inserted;
after removing the component-supporting mold from the first mold while leaving the primary molded article in the first mold, defining a second molding cavity by matching a second mold providing another of the lens front surface and the lens back surface with the first mold; and
performing curing treatment on a second molding material within the second molding cavity thereby manufacturing the contact lens as an integrally molded product in which the component is embedded, wherein
the component-supporting mold is made of a material having adhesion with respect to the first molding material smaller than adhesion of the component with respect to the first molding material.

5. The method according to any one of claims 1-4, wherein
the first mold is a mold for the lens front surface, and
the second mold is a mold for the lens back surface.

6. The method according to any one of claims 1-5, wherein
a recess opening toward the component-supporting mold is provided at a center portion of the primary molded article such that a thickness dimension at the center portion of the primary molded article is reduced.

7. The method according to any one of claims 1-6, wherein
the component-supporting mold includes at least one of a concave engaging part and a convex engaging part positioning the component.

8. The method according to claim 7, wherein
when molding the primary molded article within the first molding cavity, the first molding material is inserted between the component-supporting mold and the component, and the curing treatment is performed on the first molding material with the component covered with the first molding material.

9. The method according to any one of claims 1-8, wherein
the component is positioned and supported by the component-supporting mold in an affixed state.

10. The method according to claim 9, wherein the component is directly formed on a surface of the component-supporting mold such that the component is positioned and supported in the affixed state.

11. The method according to any one of claims 1-10, wherein the component is positioned and supported by the component-supporting mold without an adhesive.

12. The method according to any one of claims 1-11, wherein the component-supporting mold is subjected to surface treatment to improve mold releasability at a cavity forming surface of the first molding cavity.

13. The method according to any one of claims 1-12, wherein the component is harder than a lens material.

14. The method according to claim 13, wherein the component is an electronic element including a metal portion.

15. The method according to any one of claims 1-13, wherein both the first molding material and the second molding material are polymerizable monomers that provide an oxygen-permeable hard lens.

16. The method according to any one of claims 1-15, wherein the first molding material and the second molding material are the same.

17. The method according to any one of claims 1-16, wherein
when performing the curing treatment on the first molding material filling the first molding cavity to obtain the primary molded article in which the component is inserted, the curing treatment is performed such that the first molding material progresses from a side of the first mold toward a side of the component-supporting mold.

18. The method according to any one of claims 1-17, wherein
after molding the first molding material and removing the component-supporting mold from the first mold, and before matching the second mold with the first mold, an intermediate molded article is attached to the primary molded article, and
the second mold is matched with the first mold in which the primary molded article including the intermediate molded article is left to define the second molding cavity, and the curing treatment is performed on the second molding material within the second molding cavity.

19. The method according to claim 18, wherein
after molding the first molding material and removing the component-supporting mold from the first mold, and before matching the second mold with the first mold, an auxiliary mold is matched with the first mold in which the primary molded article is left to define an intermediate mold cavity,
the intermediate mold cavity is filled with a third molding material and curing treatment is performed to mold the intermediate molded article in an attached state to the primary molded article, and then
the auxiliary mold is removed from the first mold, the second mold is matched with the first mold in which the primary molded article including the intermediate molded article is left to define the second molding cavity, and the curing treatment is performed on the second molding material within the second molding cavity.

20. The method according to claim 18, wherein the intermediate molded article is formed separately from the primary molded article, and is attached to the primary molded article.

21. The method according to any one of claims 18-20, wherein the intermediate molded article is made of a silicone material.

22. The method according to any one of claims 18-21, wherein a recessed part is formed at a center portion of the primary molded article, and the intermediate molded article is inserted in and attached to the recessed part.

23. The method according to any one of claims 18-22, wherein the intermediate molded article is provided at a lens center portion, and an entire surface on a lens front surface side of the intermediate molded article is covered with a surface layer formed of the first molding material or the second molding material.

24. The method according to any one of claims 1-23, wherein
the first mold includes a concave cavity forming surface that provides a molding surface for the lens front surface,
the second mold includes a convex cavity forming surface that provides a molding surface for the lens back surface, and
with the first mold opening vertically upward, the component-supporting mold and the second mold are individually matched with the first mold by being overlapped from above.

25. The method according to any one of claims 1-24, wherein the method is for manufacturing a scleral lens.

26. A contact lens made of an oxygen-permeable hard lens material comprising:
a component to be embedded placed inside in a fastened state to the oxygen-permeable hard lens material;
an intermediate member arranged inside a lens center portion while being made of a silicone material;
a front surface layer provided to cover an entire surface of the intermediate member on a lens front surface side while being made of the oxygen-permeable hard lens material; and
at least on a lens center axis, the front surface layer has a thickness dimension smaller than that of the intermediate member.

27. The contact lens according to claim 26, further comprising a back surface layer provided to cover an entire surface of the intermediate member on a lens back surface side while being made of the oxygen-permeable hard lens material, wherein
at least on the lens center axis, the back surface layer has a thickness dimension smaller than that of the intermediate member.

28. The contact lens according to claim 26 or 27, wherein at least an outer peripheral end of a lens peripheral portion is free of the intermediate member and is formed of the oxygen-permeable hard lens material.

29. The contact lens according to any one of claims 26-28, wherein
at a position where a lens thickness is maximum, the lens thickness that is maximum is greater than 0.7 mm, and
a total thickness of the surface layers that are made of the oxygen-permeable hard lens material and are provided on opposite sides of the intermediate member in a lens thickness direction is not greater than 0.7 mm.

30. The contact lens according to any one of claims 26-29, wherein the contact lens is a scleral lens.
